Europäisches Patentamt

(19) European Patent Office

Office européen des brevets

(11) **EP 0 942 547 A1**

## (12) EUROPEAN PATENT APPLICATION
published in accordance with Art. 158(3) EPC

(43) Date of publication:
15.09.1999 Bulletin 1999/37

(21) Application number: 98938944.0

(22) Date of filing: 24.08.1998

(51) Int. Cl.[6]: **H04J 11/00**

(86) International application number:
PCT/JP98/03728

(87) International publication number:
WO 99/12294 (11.03.1999 Gazette 1999/10)

(84) Designated Contracting States:
DE FR GB

(30) Priority: 28.08.1997 JP 23292997

(71) Applicant:
KABUSHIKI KAISHA TOSHIBA
Kawasaki-shi, Kanagawa-ken 210-8572 (JP)

(72) Inventor: YAMASAKI, Shoichiro
Tokyo 154-0001 (JP)

(74) Representative:
Kramer, Reinhold, Dipl.-Ing. et al
Blumbach, Kramer & Partner GbR
Patentanwälte
Radeckestrasse 43
81245 München (DE)

## (54) MULTI-CARRIER TRANSMITTER

(57) In the present invention, clip distortions generated when a received multicarrier signal is converted into a digital signal by an A/D 22 are regarded as additive noise, and the positions and number of clip distortions are detected by a DET 28 on the basis of the output from the A/D 22. The difference values between information symbols at two ends of a received block signal on the frequency axis, which is output from a DFT 24 and known zero symbols are obtained by subtracters 26 and 27. A CAN 25 estimates the magnitudes of clip distortions from the difference values and the detection result of the position and number of clips and cancels the clip distortions.

FIG. 2A

FIG. 2B

EP 0 942 547 A1

## Description

Technical Field

The present invention relates to a multicarrier transmission apparatus for performing, e.g., digital audio broadcasting, digital TV broadcasting, or radio LAN information transmission.

Background Art

In recent years, a multicarrier transmission scheme, i.e., OFDM (Orthogonal Frequency Division Multiplex) is attracting attention as a digital transmission scheme used for, e.g., a digital TV broadcasting system.

In the multicarrier transmission scheme, transmission data is divided into block signals in units of a predetermined number of data, and the signals are transmitted by a number of carrier waves (carriers) which are orthogonal to each other in units of block signals.

This scheme is robust against ghost because the data transfer rate per carrier can be made low. In addition, since the influence of transmission distortion can be decreased, waveform equalization can be simplified.

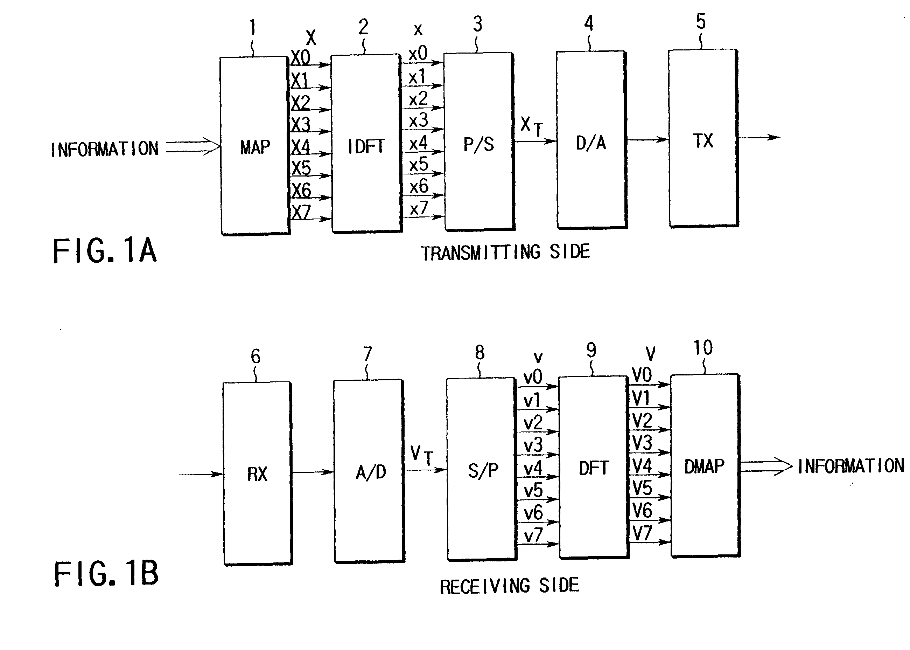

FIGS. 1A and 1B are block diagrams showing the arrangement of a multicarrier transmission apparatus. FIG. 1A shows the arrangement of a transmitting-side apparatus, and FIG. 1B shows the arrangement of a receiving-side apparatus.

In the transmitting-side apparatus, first, an information bit string is mapped to signal points according to a modulation scheme by a mapping circuit (MAP) 1, thereby converting the information bit string into N (N = 8 in FIG. 1A) parallel signals X0 to X7.

The parallel signals X0 to X7 as signals on the frequency axis are converted into signals x0 to x7 on the time axis by an N-point inverse discrete Fourier transform (IDFT) 2.

The signals x0 to x7 on the time axis as parallel signals are converted into a serial signal xT by a parallel/serial converter (P/S) 3 and further converted into an analog signal by a digital/analog converter (D/A) 4.

This analog signal is up-converted into a carrier wave frequency by a transmission circuit (TX) 5 and simultaneously amplified to a predetermined transmission power level by a transmission power amplifier, and then, transmitted from an antenna (not shown) to a radio channel.

On the receiving-side apparatus, the multicarrier transmission signal sent from the transmitting-side apparatus is input to a reception circuit (RX) 6 through an antenna (not shown).

The multicarrier transmission signal as the received signal is high-frequency-amplified by the reception circuit (RX) 6 and simultaneously down-converted into a baseband signal.

This received signal is converted into a digital signal by an analog/digital converter (A/D) 7 and further converted into N (N = 8) received block signals v0 to v7 by a serial/parallel converter (S/P), and then, input to a discrete Fourier transform (DFT) 9.

The DFT 9 converts the received block signals v0 to v7 as signals on the time axis into signals V0 to V7 on the frequency axis. The signals V0 to V7 are input to a demapping circuit (DMAP) 10.

The demapping circuit 10 demapps the signals V0 to V7 to reproduce information data. The basic technology of the multicarrier transmission scheme is described in, e.g., Bingham, J.A.C., "Multicarrier Modulation for Data Transmission: An Idea Whose Time Has Come", IEEE Commu. Mag., vol. 28, no. 5, pp. 5 - 14, May 1990.

A multicarrier transmission signal comprising a number of carrier wave components has a noise-like form and a large amplitude variation. For this reason, an analog circuit such as an amplifier in the transmission and reception apparatuses must have a sufficient linear operation range.

However, an analog circuit such as an amplification circuit generally has a limited signal amplitude range for linear operation. A signal having an amplitude exceeding a certain value has nonlinear distortions to cause a code error in reproduced data. Additionally, use of an analog circuit having a wide linear operation range undesirably results in an increase in cost and circuit scale of the apparatus.

Conventionally, an information signal is subjected error correction coding in the transmitting-side apparatus in general and sent, and the receiving-side apparatus performs error correction decoding, thereby coping with a code error due to nonlinear distortion. However, such a measure against errors requires redundant data added to transmission information. Addition of redundant data lowers the transmission efficiency.

As described above, in the conventional multicarrier transmission apparatus, since the linear operation range of an analog circuit is limited, nonlinear distortion occurs in a transmission signal, resulting in a code error.

A solution to this problem increases the cost or circuit scale of the apparatus. When redundant data for error control is added, the information transmission efficiency becomes low.

Disclosure of Invention

The present invention has been made in consideration of the above situation, and has as its object to provide a multicarrier transmission apparatus capable of estimating and canceling a signal distortion generated in a multicarrier transmission signal due to the nonlinear characteristics of a transmission or reception circuit without increasing the cost and scale of the apparatus or lowering the transmission efficiency.

In order to achieve the above object, according to the first invention, in a multicarrier transmission apparatus for performing signal transmission to a transmission apparatus which adds transmission redundant signals known between transmitting and receiving sides to transmission information signals of a plurality of systems to generate a transmission block signal, converts the transmission block signal on a frequency axis into a transmission block signal on a time axis to generate a transmission multicarrier signal, and transmits the transmission multicarrier signal from a transmission circuit to a transmission channel,

additive noise canceling means is newly arranged in addition to a reception circuit for receiving the transmission multicarrier signal transmitted from the transmission apparatus, received block signal reproduction means for reproducing a received block signal corresponding to the transmission block signal from the received multicarrier signal received by the reception circuit, and orthogonal transform means for converting the received block signal on a time axis reproduced by the received block signal reproduction means into a received block signal on a frequency axis. The additive noise canceling means obtains a difference between received redundant signals contained in the received block signal on the frequency axis, which is converted by the orthogonal transform means, and the known transmission redundant signals, and, on the basis of the difference value, estimates and cancels additive noise components generated by signal distortions in the received block signal on the frequency axis.

According to the present invention, even when signal distortions occur in the received multicarrier signal due to the nonlinear characteristics of the transmission circuit of the transmission apparatus or reception circuit of the reception apparatus, and additive noise is generated in the received block signal by the influence of the signal distortions, the additive noise components are estimated and canceled on the basis of the difference value between the received redundant signals and the known transmission redundant signals. Consequently, the signal distortions are canceled, so the received information signal can be reproduced at high quality without using any expensive transmission/reception circuit having a wide linear operation range.

In the second invention, the nature of signal distortions generated in the received multicarrier signal is estimated by signal distortion estimation means on the basis of the difference value between the received redundant signals contained in the received block signal and the known transmission redundant signals. Signal distortion compensation means is inserted between the reception circuit and the received block signal reproduction means. With this compensation means, the signal distortions in the received multicarrier signal are compensated for on the basis of the nature of the signal distortions, which is estimated by the signal distortion estimation means.

According to this invention, even when signal distortions occur in the received multicarrier signal, compensation processing is performed to equalize the signal distortions with the received multicarrier signal. For this reason, a received information signal is reproduced from the received multicarrier signal whose signal distortions are compensated for. Hence, as in the first invention, the received information signal can be reproduced at high quality without using any expensive transmission/reception circuit having a wide linear operation range.

In addition, according to this invention, the transmission characteristics themselves are compensated by the compensation means before orthogonal transform on the basis of the additive noise estimation result. Hence, even when random noise is added to the received multicarrier signal, nonlinear distortions can be stably canceled without causing any estimation errors.

The effects of the first and second inventions can be further enhanced especially by employing the following specific means.

More specifically, as the redundant signals for estimating additive noise or signal distortions, zero symbols arranged at two end portions of the transmission block signal to avoid interference to a near-by band or a control pilot symbol is used. With this arrangement, the additive noise or signal distortions can be estimated and canceled without adding any new redundant signals, and a high-quality multicarrier transmission free from the influence of signal distortions can be performed without lowering the transmission efficiency.

In addition, detection means for detecting positions and number of signal distortions generated in the received multicarrier signal in a transmission zone between the transmission circuit and the reception circuit is arranged. The additive noise or signal distortions are estimated and canceled on the basis of the detection result from the detection means and the difference value between the received redundant signals contained in the received block signal on the frequency axis, which is converted by the orthogonal transform means, and the known transmission redundant signals. With this arrangement, since estimation calculation of the additive noise or signal distortions can be performed with the known positions of signal distortions, calculation processing can be simplified.

Furthermore, in estimating the additive noise or signal distortions, only when the number of signal distortions detected by the detection means is equal to or smaller than the number which can be estimated from the known transmission redundant signals, estimation calculation of the additive noise components or signal distortions is performed. When the number of signal distortions exceeds the number which can be estimated from the known transmission redundant signals, estimation calculation of the additive noise components or signal distortions is not performed. With this arrangement, since calculation is performed only when estimation is allowed, wasteful calculation processing is further omitted, so calculation processing can be further simplified.

According to the third invention, in a multi-carrier transmission apparatus for performing signal transmission to a transmission apparatus which synthesizes first transmission information signals of a plurality of systems with second transmission information signals of a plurality of systems, which have higher priority than that of the first transmission information signals, to generate a transmission block signal, and converts the transmission block signal on a frequency axis into a transmission block signal on a time axis to generate a transmission multicarrier signal, and transmits the generated transmission multicarrier signal from a transmission circuit to a transmission channel,

additive noise canceling means is arranged in addition to a reception circuit for receiving the transmission multicarrier signal transmitted from the transmission apparatus through the transmission channel, received block signal reproduction means for reproducing a received block signal corresponding to the transmission block signal from a received multicarrier signal received by the reception circuit, orthogonal transform means for converting the received block signal reproduced by the received block signal reproduction means on a time axis into a received block signal on a frequency axis, and correction means for correcting second received information signals in the received block signal converted by the orthogonal transform means, which correspond to the second transmission information signals. On the basis of the second received information signals before correction by the correction means and the second received information signals after correction, the additive noise canceling means estimates and cancels additive noise components generated in the received block signal on the frequency axis by signal distortions.

In the fourth invention, signal distortion estimation means is arranged, and signal distortion compensation means is inserted between the reception circuit and the received block signal reproduction means. On the basis of the second received information signals before correction by the correction means and the second received information signals after correction, the signal distortion estimation means estimates the characteristics of the signal distortions generated in the received multicarrier signal. The signal distortion compensation means compensates for the signal distortions in the received multicarrier signal on the basis of the estimated characteristics of the signal distortions.

More specifically, in the third and fourth inventions, based on the fact that in a system for hierarchically transmitting general information signals and priority information signals having a higher resisting capability against degradation in quality of transmission channel than that of the general information signals, the priority information signals can be reliably reproduced on the receiving-side transmission apparatus at high probability, priority information signals after error correction are used as if they were known redundant signals. With this arrangement, the additive noise contained in the received block signal or signal distortions generated in the received multicarrier signal are estimated and canceled.

According to these inventions, even when signal distortions occur in the received multicarrier signal due to the nonlinear distortions of the transmission circuit of the transmission apparatus or reception circuit of the reception apparatus, the signal distortions can be canceled without adding any new redundant signals, and high-quality received information signals can be reproduced.

The fifth invention comprises, in addition to orthogonal transform means for converting an input received block signal on a time axis into an input received block signal on a frequency axis and demodulation means for demodulating information signals contained in the received block signal on the frequency axis, which is output from the orthogonal transform means, to reproduce information data, replacement means for replacing received redundant signals contained in the received block signal on the frequency axis, the received block signal being output from the orthogonal transform means, with control signals generated on the basis of known transmission redundant signals, inverse orthogonal transform means for converting the received block signal on the frequency axis after signal replacement by the replacement means back into the received block signal on the time axis, and correction means for replacing, of signal elements of the received block signal generated by received block signal generation means, signal elements which are estimated by detection means to be added with distortions larger than a predetermined amount with corresponding signal elements of the received block signal output from the inverse orthogonal transform means. This invention further comprises detection means for estimating, from a plurality of signal elements contained in the received block signal reproduced by the received block generation means, positions and number of signal elements added with distortions larger than a predetermined amount, and control means. The control means repeatedly executes an operation of inputting the received block signal output from the received block signal reproduction means to the orthogonal transform means, inputting the received block signal output from the orthogonal transform means to the inverse orthogonal transform means through the replacement means, causing the correction means to generate a corrected received block signal, inputting the corrected received block signal to the orthogonal transform means, inputting the received block signal output from the orthogonal transform means to the inverse orthogonal transform means through the replacement means, and causing the correction means to generate a corrected received block signal on the basis of the output from the inverse orthogonal transform means a predetermined number of times, and after the repetitive operation is ended, causes the demodulation means to demodulate the information data on the basis of the received block signal output from the orthogonal transform means.

According to this invention, in the receiving-side transmission apparatus, the operation of replacing the known redundant signals in the received block signal is converted into a known redundant signal on a frequency axis by orthogonal transform with control signals and then converting the signal again by inverse orthogonal transform, when nonlinear distortions are contained in the received block signal, detecting the positions of nonlinear distortions and correcting the signal elements from which the nonlinear distortions are detected to corresponding signal elements in the received block signal after inverse orthogonal transform is executed at least once.

That is, orthogonal transform and inverse orthogonal transform used to generate and separate an OFDM signal are also used to estimate and cancel additive distortions. For this reason, even when the received block signal passes through an apparatus or transmission channel having no sufficient linear operation range and obtains nonlinear distortions, the nonlinear distortions are estimated and canceled in the receiving-side transmission apparatus.

Since the additive distortions are canceled using the redundant signals which have already been contained in the OFDM signal and known between the transmitting and receiving sides, no new redundant signals need be used, and the transmission efficiency is not lowered.

In the fifth invention, by integrating or selecting the signal elements of the received block signal to decrease the number of signal elements, the number of points of orthogonal transform or inverse orthogonal transform used to cancel the additive distortions can be reduced to decrease the calculation amount.

The sixth invention is a multicarrier transmission apparatus characterized by comprising:

first conversion means for converting a transmission signal block on a frequency axis, which has a plurality of signals, into a transmission signal block on a time axis;

transmission means for transmitting the transmission signal block converted by the first conversion means;

reception means for receiving the transmission signal block transmitted by the transmission means as a received signal block on the time axis; and

second conversion means for converting the received signal block received by the reception means into a received signal block on the frequency axis,

wherein the plurality of signals contained in the received signal block on the time axis and the received signal block on the frequency axis have known signals whose transmitted values are known and unknown signals other than the known signals,

and the apparatus comprises correction means for correcting at least one of the unknown signals contained in the received signal block on the time axis and the unknown signals contained in the received signal block on the frequency axis to one of unknown signals contained in the transmission signal block on the time axis and unknown signals contained in the transmission signal block on the frequency axis on the basis of the known signals contained in the received signal block on the frequency axis, which is converted by the second conversion means.

According to this invention, since at least one of the unknown signals contained in the received signal block on the time axis and the unknown signals contained in the received signal block on the frequency axis is corrected by the correction means to an unknown signal contained in the transmission signal block, the influence of signal distortions can be decreased.

According to the seventh invention, the sixth invention is characterized in that the first conversion means converts the transmission signal block on the frequency axis into the transmission signal block on the time axis by inverse discrete Fourier transform, and

the second conversion means converts the received signal block on the time axis into the received signal block on the frequency axis by discrete Fourier transform.

According to the seventh invention, since inverse discrete Fourier transform (Inverse Discrete Fourier Transform: IDFT) and discrete Fourier transform (Discrete Fourier Transform: DFT) are used, high-speed calculation can be realized.

According to the eighth invention, the sixth invention is characterized by further comprising

first replacement means for replacing at least one of the known signals contained in the received signal block on the frequency axis, which is converted by the second conversion means, with the transmitted value,

third conversion means for converting the received signal block on the frequency axis, which contains the known signal replaced by the first replacement means, into the received signal block on the time axis,

determination means for determining whether the plurality of signals contained in the received signal block received by the reception means exceed a predetermined amplitude level, and

second replacement means for replacing a signal which is determined to exceed the predetermined amplitude level by the determination means with a signal contained in the received signal block on the time axis, which is converted by the third conversion means, and corresponding to the signal which is determined to exceed the predetermined amplitude level.

According to the eighth invention, a known inverse Fourier transform can be used as the third conversion means. To correct only a specific unknown signal, correction can be performed using some known signals and conversion means having a small number of points at a small calculation amount.

The ninth invention is characterized in that the known signal represents information to be transmitted, and

correction by the correction means is performed using a known signal reproduced by mapping the known signals contained in the received signal block on the frequency axis, which is converted by the second conversion means, and demapping the mapped known signals.

According to the ninth invention, since a signal for which a modulation scheme robust against a transmission error can reproduce data without any errors on the receiving side even when the signal is degraded in the transmission channel, a signal component without any degradation can be reproduced by remodulating the reproduced data. Hence, this signal is used as the known signal on the frequency axis. In this case, a pilot signal or the like is unnecessary.

In the above-described inventions, as the known signals on the frequency axis, zero value signals in a block on the frequency axis, which are inserted to limit the band, or pilot signals set in advance to have a predetermined amplitude value can be used.

When the degradation in the transmission channel occurs due to nonlinear components having saturation characteristics, signals having large amplitudes are degraded. For this reason, signals having small amplitudes can be used as the known signals on the time axis.

The known signals on the time axis can be obtained from the known signals on the frequency axis and unknown signals on the frequency axis.

Brief Description of Drawings

FIG. 1A is a block diagram for explaining a conventional multicarrier transmission apparatus.

FIG. 1B is a block diagram for explaining the conventional multicarrier transmission apparatus.

FIG. 2A is a block diagram showing a transmitting-side transmission apparatus according to the first embodiment of the present invention.

FIG. 2B is a block diagram showing a receiving-side transmission apparatus according to the first embodiment of the present invention.

FIG. 3 is a graph showing spectrum characteristics obtained when no null signals are inserted to symbol positions at two ends of a signal block.

FIG. 4 is a graph showing spectrum characteristics obtained when null signals are inserted to symbol positions at two ends of a signal block.

FIG. 5 is a graph showing a signal waveform so as to explain a clip operation of an A/D converter.

FIG. 6 is a graph showing a signal model obtained when the clip operation is performed while adding additive noise.

FIG. 7A is a block diagram showing a transmitting-side transmission apparatus according to the second embodiment of the present invention.

FIG. 7B is a block diagram showing a receiving-side transmission apparatus according to the second embodiment of the present invention.

FIG. 8 is a graph showing an example of nonlinear input-to-output characteristics of a reception circuit.

FIG. 9 is a graph showing an example of nonlinear input-to-output characteristics for compensation set in a compensator.

FIG. 10A is a graph showing an input signal waveform so as to explain an amplitude limiting operation due to the nonlinear characteristics of the reception circuit.

FIG. 10B is a graph showing an output signal waveform so as to explain an amplitude limiting operation due to the nonlinear characteristics of the reception circuit.

FIG. 10C is a graph showing an additive noise model according to the nonlinear characteristics.

FIG. 11A is a block diagram showing a transmitting-side transmission apparatus according to the third embodiment of the present invention.

FIG. 11B is a block diagram showing a receiving-side transmission apparatus according to the third embodiment of the present invention.

FIG. 12A is a block diagram showing a transmitting-side transmission apparatus according to the fourth embodiment of the present invention.

FIG. 12B is a block diagram showing a receiving-side transmission apparatus according to the fourth embodiment of the present invention

FIG. 13 is a block diagram showing a transmitting-side transmission apparatus according to the fifth embodiment of the present invention.

FIG. 14 is a block diagram showing a receiving-side transmission apparatus according to the fifth embodiment of the present invention.

FIG. 15 is a block diagram showing a receiving-side transmission apparatus according to the sixth embodiment of the present invention.

FIG. 16 is a block diagram showing a receiving-side transmission apparatus according to the seventh embodiment of the present invention.

FIG. 17 is a block diagram showing a transmitting-side transmission apparatus according to the eighth embodiment of the present invention.

FIG. 18 is a block diagram showing a receiving-side transmission apparatus according to the eighth embodiment of the present invention.

FIG. 19A is a block diagram showing a transmitting-side transmission apparatus according to the ninth embodiment of the present invention.

FIG. 19B is a block diagram showing a receiving-side transmission apparatus according to the ninth embodiment of the present invention.

FIG. 20 is a view for explaining a signal compensation method in the embodiment.

FIG. 21A is a block diagram showing a transmitting-side transmission apparatus according to the 10th embodiment of the present invention.

FIG. 21B is a block diagram showing a receiving-side transmission apparatus according to the 10th embodiment of the present invention.

FIG. 22 is a block diagram showing another receiving-side transmission apparatus according to the 10th embodiment of the present invention.

Best Mode of Carrying Out the Invention

The embodiments of the present invention will be described below with reference to the accompanying drawings.

(First Embodiment)

In a multicarrier transmission apparatus according to the first embodiment of the present invention, to prevent a transmitting-side transmission apparatus from interfering with a near-by band, null signals (zero symbols) are transmitted at two end portions of the transmission band of the transmitting-side transmission apparatus itself.

A receiving-side transmission apparatus regards a clip distortion generated due to the allowable input amplitude range of an A/D converter as additive noise and detects the number and positions of clip distortions on the basis of the output from the A/D converter.

By performing calculation on the basis of the detection result and the difference value between the reception redundant symbols at the two ends of the received block signal after orthogonal transform and the known zero symbols, the clip distortion is estimated and canceled.

A technique of transmitting null signals (zero symbols) at two end portions of a transmission band is described in detail in, e.g.,

H. Sari, G Karam, and I. Jeanclaude, "Transmission Techniques for Digital TV erretrial TV broadcasting", IEEE Communication Magazine, Vol. 33, No2, pp. 100 - 109, Feb. 1995.

This embodiment will be described below in detail with reference to the accompanying drawings. A description will be made assuming that the number of multicarriers N is 8, and two null signals as known control redundant signals between the transmitter and receiver are inserted to the two end portions of the transmission band, respectively.

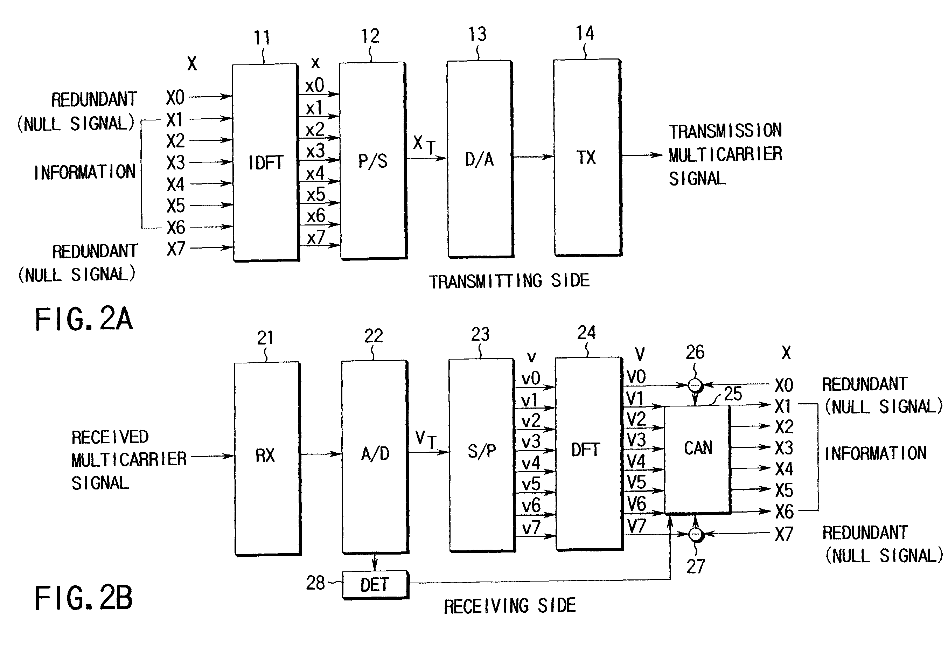

FIG. 2A is a block diagram showing the arrangement of a transmitting-side transmission apparatus according to this embodiment. FIG. 2B is a block diagram showing the arrangement of a receiving-side transmission apparatus according to this embodiment.

In the transmitting-side transmission apparatus, first, transmission information data is mapped to phase positions on a complex plane according to, e.g., PSK (Phase Shift Keying) or QAM (Quadrature Amplitude Modulation) by a mapping circuit (not shown).

Mapped transmission information signals X1 to X6 are input to an inverse discrete Fourier transform (IDFT; Inverse Discrete Fourier Transform) 11. At this time, null signals X0 and X7 each of which makes a corresponding one of symbols at two ends of the signal block a zero symbol are input to the IDFT 11.

The IDFT 11 converts a transmission block signal X comprising the six input transmission information signals X1 to X6 and the two null signals X0 and X7 on the frequency axis into a transmission block signal on the time axis. More specifically, the IDFT 11 outputs a transmission block signal $\underline{x}$ on the time axis:

$$x = (x0 \ x1 \ ... \ xN\text{-}1)T$$

for

$$xi = \frac{1}{N}\sum_{k=0}^{N-1}\omega^{-ik}X_k, \ i = 0,...,N - 1 \qquad\qquad (1)$$

$$w = e^{-j2\pi/N}$$

The transmission block signals $\underline{x}$ output from the IDFT 11 are converted from parallel signals into a serial signal by a parallel/serial converter (P/S; Parallel/Serial Converter) 12 and then converted into an analog signal, i.e., a transmission signal by a digital/analog converter (D/A; Digital/Analog Converter) 13.

This transmission signal is frequency-converted into a multicarrier signal having a predetermined radio frequency and power-amplified to a predetermined transmission level by a transmission circuit (TX) 14, and then, transmitted from an antenna (not shown) to a radio channel.

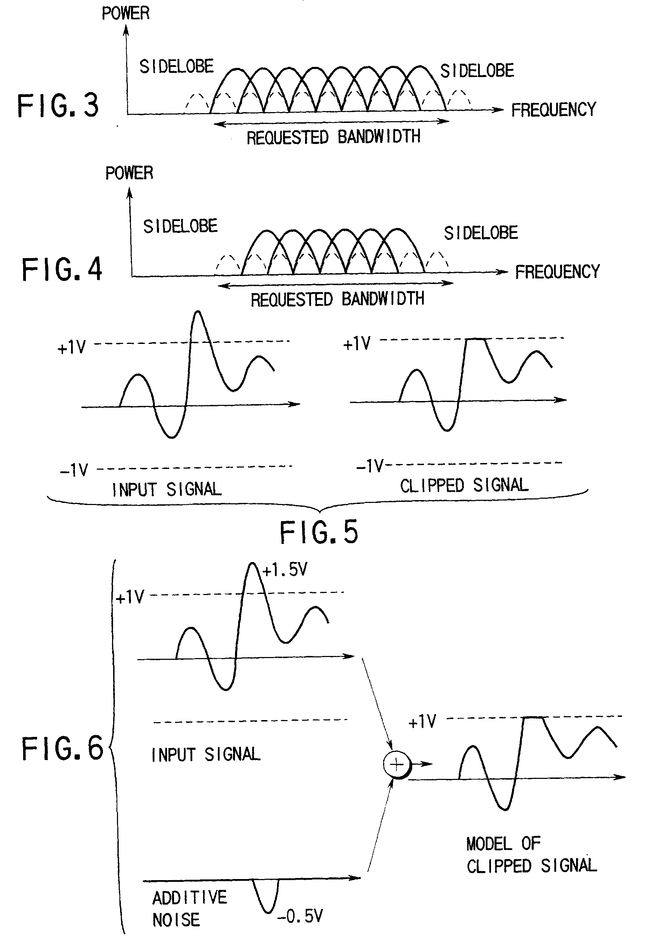

FIG. 4 is a graph showing the spectrum of the multicarrier transmission signal transmitted through the radio channel. Since the null signals are inserted to symbols at the two ends, the spectrum falls within the given bandwidth including sideband waves. FIG. 3 shows the spectrum characteristics obtained when no null signals are inserted to symbol positions at two ends of a signal block.

In the receiving-side transmission apparatus, the transmission multicarrier signal transmitted from the transmitting-side transmission apparatus is input to a reception circuit (RX) 21 through an antenna (not shown). The reception multicarrier signal is high-frequency-amplified and frequency-converted into a baseband signal by the reception circuit 21, and then, amplified by a baseband amplifier.

The received signal output from the reception circuit 21 is converted into a digital signal by an analog/digital converter (A/D; Analog/Digital Converter) 22.

The transmission multicarrier signal is obtained by converting N (N = 8) signals on the frequency axis into N (N = 8) signals on the time axis, as described above, and therefore has an amplitude variation.

This amplitude variation becomes larger as N becomes larger. For this reason, to receive and reproduce the signal while holding its signal waveform, the A/D 22 requires a large number of bits. In fact, however, the number of bits of the A/D 22 is limited because of the circuit scale or the like. That is, the allowable input amplitude range is limited.

Hence, the signal waveform is clipped at a portion where it is outside the allowable input amplitude range before the reception multicarrier signal is converted into a digital signal by the A/D 22, as shown in FIG. 5. This clip operation can be modeled as noise of -0.5V added to an input signal waveform of +1.5V, as shown in FIG. 6. When the amplitude limitation by the A/D 22 is modeled as additive noise $\underline{e}$, an output signal block $\underline{v}$ from the A/D 22 is given by:

$$v = x + e$$

where

$$V = (v0 \ v1 \ ... \ vN\text{-}1)$$

$$e = (e0 \ e1 \ ... \ eN\text{-}1)$$

The received block signal is converted into N (N = 8) parallel signals $\underline{v}$ by a serial/parallel converter (S/P; Serial/Parallel Converter) 23, and each signal $\underline{v}$ is input to an N-point, i.e., 8-point discrete Fourier transform (DFT; Discrete Fourier Transform) 24 as one signal block vi (i = 0, 1, ..., 7). The discrete Fourier transform 24 converts the eight received block signals on a frequency axis into light received block signals on a time axis. More specifically, the DFT 24 generates a received block signal V on the frequency axis represented by

$$V = (V_0 \ V_1 \ ... \ V_{N-1})^T \tag{2}$$

$$V_k = \sum_{i=0}^{N-1} \omega^{ik}{}_{\upsilon i}, \ k = 0, ..., N - 1$$

The received block signal V is input to a canceler (CAN) 25 and subtracters 26 and 27. The subtracters 26 and 27 calculate the difference values between two signals V0 and V7 at two ends of the received block signal V and the known null signals X0 and X7. The difference values are supplied to the CAN 25.

The positions and number of additive noise components detected by a detector (DET) 28 are also supplied to the CAN 25. The CAN 25 estimates and cancels the additive noise contained in the received block signal V on the frequency axis on the basis of the positions and number of additive noise components supplied from the DET 28 and the difference values supplied from the subtracters 26 and 27.

The additive noise estimation/cancel operation will be described below in detail.

The additive noise block $\underline{e}$ is modeled as the clip operation of the A/D 22, as described above, so the positions and number of clipped signals can be specified. That is, elements corresponding to clip positions are nonzero, and the remaining elements are zero. These elements can he detected by the DET 28. However, the magnitude of each nonzero element is unknown, though it can be estimated from the received block signal V output from the DFT 24. The procedure will be described below.

The output signal block V from the DFT 24 is given by

$$V = X + E$$

In this case,

$$E = (E0 \ E1 \ ... \ EN-1)T$$

is obtained by discrete Fourier transform of the additive noise $\underline{e}$ corresponding to the clip distortion. In addition,

$$(X0 \ X1 \ ... \ Xt-1)T,$$

$$(XN-t \ XN-t+1 \ ... \ XN-1)T$$

represent known redundant signals (null signals) which are known as zero on the receiving side.

Hence, (E0 E1 ... Et-1)T and (EN-t En-t+1 ... EN-1)T are estimated from

$$Ek = Vk - Xk,$$

$$k = 0, 1, ..., N-1, N-t, N-t+1, ..., N-1$$

As described above, the additive noise $\underline{e}$ is modeled as the clip operation of the A/D 22. For this reason, the positions and number of nonzero elements of the N elements (ei, i = 1, 2, ..., N-1) of the additive noise $\underline{e}$ can be detected by the DET 28. Let $\nu$ ($\nu \leq 2t$) be the number of nonzero elements, and $i\mu$, $\mu = 1, 2, ..., \nu$ be the positions. The position polynomial $\Lambda(x)$ of the additive noise is defined as

$$\Lambda(x) = \prod_{\mu=1}^{\nu} (1 - x\omega^{i\mu}) \tag{3}$$

$$= \Lambda_0 + \Lambda_1 x + ... + \Lambda_\nu x^\nu$$

In this case, $\Lambda 0 = 1$, and the coefficients of the remaining x are also calculated from the positions of the additive noise.

Discrete Fourier transform of $(\Lambda 0, \Lambda 1, ..., \Lambda \nu)$ yields

$$\lambda i = (1/N)\Lambda(\omega - i)$$

At this time, the following relationship holds:

$$\lambda_i e_i = 0, i = 0, ..., N\text{-}1 \qquad\qquad (4)$$

$$E_j = - \sum_{k=1}^{\nu} \Lambda_k E_{j\text{-}k}, j = 0, ..., N - 1$$

In equation (4), $\Lambda k, k = 0, 1, ..., \nu$ is calculated. From $\Lambda k$ and $Ek, k = 0, 1, ..., N\text{-}1, N\text{-}t, N\text{-}t+1, ..., N\text{-}1$,

$$E_k, k = t, t+1, ..., N\text{-}t\text{-}1$$

is calculated. Finally, an information signal Xk is obtained:

$$Xk, k = t, t+1, ..., N\text{-}t\text{-}1$$

When the number of additive noise components is equal to or smaller than 2t or the number of redundant data, the magnitude of the additive noise Ek can be estimated, so the additive noise can be canceled by the CAN 25. On the other hand, when the number of additive noise is larger than 2t or the number of redundant data, the additive noise cannot be estimated, so the CAN 25 does not perform processing for estimation/cancel.

As described above, in this embodiment, a clip distortion generated upon converting the reception multicarrier signal into a digital signal by the A/D 22 is regarded as additive noise.

Subsequently, the DET 28 detects the positions and number of clip distortions on the basis of the output from the A/D 22. Simultaneously, the subtracters 26 and 27 obtain the difference values between the information symbols at the two ends of the received block signal on the frequency axis, which is output from the DFT 24, and known zero symbols. The CAN 25 estimates the magnitude of the clip distortion on the basis of the difference values and the positions and number of clips and cancels it.

According to the first embodiment, even when clip distortion occurs upon converting the received block signal into a digital signal by the A/D 22, the clip distortion can be estimated and canceled on the basis of the null signals as far as the number of clip distortions is equal to or smaller than 2t or the number of null signals as known redundant data. For this reason, high-quality reception information data can be reproduced without using any expensive A/D having a wide allowable input amplitude range.

In addition, since a clip distortion is estimated using, as redundant data, the null signals which have already been inserted to prevent interference to the near-by band, no new redundant data need be added, so the above effect can be obtained without lowering the transmission efficiency.

Furthermore, only when the number of clip distortions is equal to or smaller than 2t or the number of null signals as known redundant data, calculation for clip distortion estimation/cancel based on the null signals is performed. When the number of clip distortions exceeds 2t or the number of null signals, calculation for estimation/cancel is not performed. With this arrangement, wasteful estimation/cancel calculation processing can be omitted, so calculation can be simplified, and the power consumption can be reduced.

In the above-described first embodiment, only clip distortion generated by the A/D 22 provided in the receiving-side transmission apparatus has been described. However, a clip distortion generated in the transmitting-side transmission apparatus can also be estimated and canceled together with the clip distortion generated by the A/D 22. In this case, the DET 28 detects the positions and number of clip distortions while regarding that additive noise is added to the reception multicarrier signal when the signal level of the reception multicarrier signal is equal to or slightly lower than the clip voltage value on the transmitting side.

In the first embodiment, zero symbols are used to estimate additive noise due to the clip distortion. However, a pilot symbol for control may be used. When known control redundant data is transmitted, this data may be used.

(Second Embodiment)

In the second embodiment of the present invention, in a receiving-side transmission apparatus, a nonlinear distortion generated due to the nonlinear characteristics of input-to-output characteristics of an amplifier or the like in the reception circuit is regarded as additive noise, and the positions and number of nonlinear distortions are detected from a reception multicarrier signal. The characteristics of the nonlinear distortion are estimated on the basis of the detection result and the difference values between reception redundant symbols at two ends of a received block signal after orthogonal transform and known zero symbols. A compensator capable of variably setting input-to-output characteristics is arranged on the input side of an orthogonal transform. Input-to-output characteristics for compensating for the estimated characteristics of nonlinear distortion are set in the compensator, and the reception multicarrier signal is passed through the compensator to compensate for the nonlinear distortion of the reception multicarrier signal.

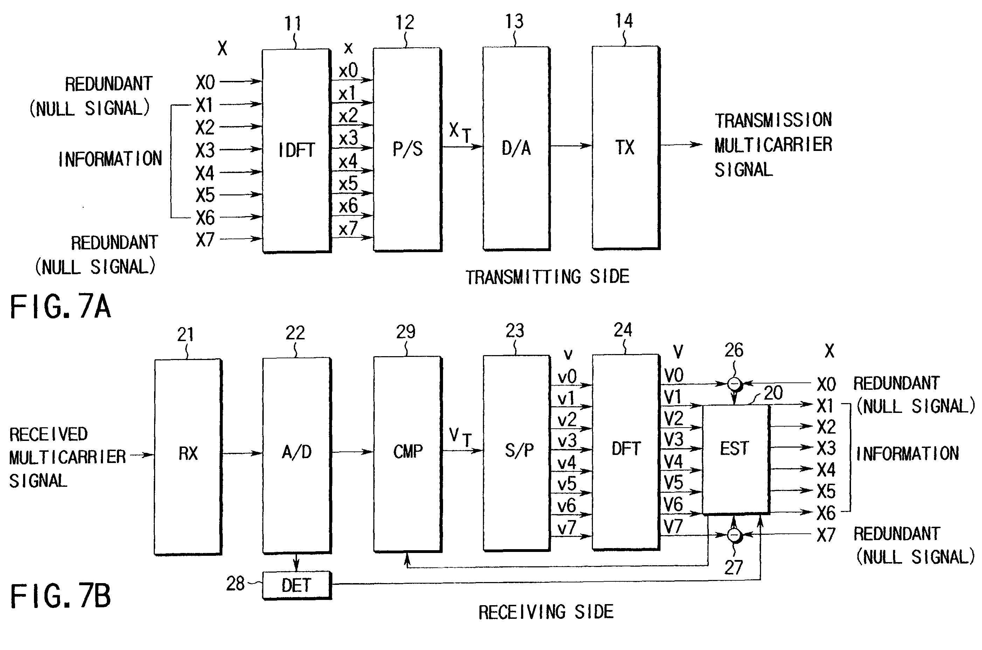

FIG. 7A is a block diagram showing the arrangement of a transmitting-side transmission apparatus according to this embodiment. FIG. 7B is a block diagram showing the arrangement of a receiving-side transmission apparatus according to this embodiment. The same reference numerals as in FIGS. 2A and 2B denote the same parts in FIGS. 7A and 7B, and a detailed description thereof will be omitted.

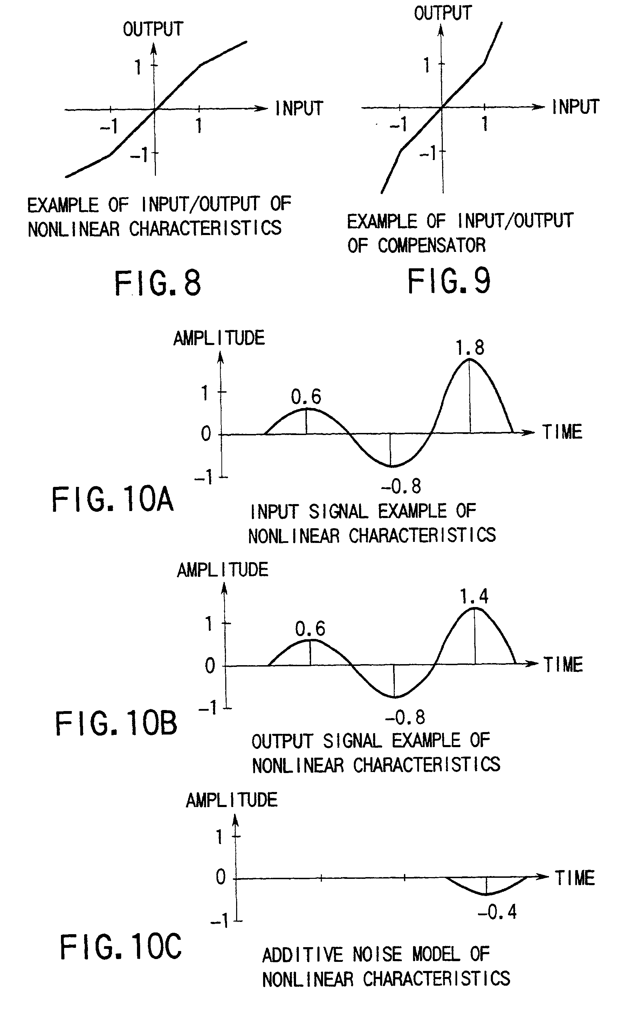

When an amplifier or the like in a reception circuit (RX) 21 has nonlinearity, a nonlinear distortion is generated in a reception multicarrier signal. For example, when the input-to-output characteristics of the amplifier represent that the linearity is lost at a voltage equal to or higher than +1V and a voltage equal to or lower than -1V, and the signal level of the reception multicarrier signal exceeds the linear operation range of +1V to -1V, a nonlinear distortion is generated. FIGS. 10A and 10B show an example. The amplitude of a 1.8V signal wave is limited to 1.4V. The amplitude limit operation due to the nonlinear characteristics of the amplifier or the like can be modeled as noise of -0.4V added to an input signal waveform of +1.8V, as shown in FIG. 10C. Hence, when the modeled additive noise is represented by $\underline{e}$, an output signal block $\underline{v}$ from the reception circuit 21 is given by

$$v = x + e$$

as in the first embodiment.

This received block signal is converted into a digital signal by an A/D 22 and input to an S/P 23 through a compensator (CMP) 29 to be described later. The signal is converted into N (N = 8) parallel signals $\underline{v}$ by the SIP 23, and each signal vi (i = 0, 1, ..., 7) is input to an N-point, i.e., 8-point DFT 24 as one signal block. The DFT 24 converts the eight received block signals $\underline{v}$ on the time axis into signals on the frequency axis. Reception information data X is reproduced from a received block signal V on this frequency axis.

When the reception information data X is to be reproduced from the received block signal V on the frequency axis, additive noise E due to the nonlinear distortion contained in the received block signal V can be estimated by an estimater (EST) 20 and subtracters 26 and 27.

More specifically as described in the first embodiment, the output signal block V from the DFT 24 is given by

$$V = X + E$$

In this case,

$$E = (E_0 \ E_1 \ ... \ E_{N-1})T$$

is obtained by discrete Fourier transform of the additive noise $\underline{e}$ corresponding to the nonlinear distortion. In addition,

$$(X_0 \ X_1 \ ... \ X_{t-1})T,$$

$$(X_{N-t} \ X_{N-t+1} \ ... \ X_{N-1})T$$

are known redundant signals (null signals) which are known as zero on the receiving side. Hence,

$$(E_0 \ E_1 \ ... \ E_{t-1})T,$$

$$(E_{N-t} \ E_{N-t+1} \ ... \ E_{N-1})T$$

are estimated from

$$E_k = V_k - X_k,$$

$$k = 0, 1, ..., N-1, N-t, N-t+1, ..., N-1$$

As described above, the additive noise $\underline{e}$ is modeled as the amplitude limit operation due to the nonlinear characteristics of the reception circuit 21. For this reason, the positions and number of nonzero elements of the N elements (ei, i = 1, 2, ..., N-1) of the additive noise $\underline{e}$ can be detected by a DET 28, as in the first embodiment. Let $\nu$ ($\nu \leqq 2t$) be the number of nonzero elements, and $i\mu$, $\mu$ = 1, 2, ..., $\nu$ be the positions. The position polynomial $\Lambda(x)$ of the additive noise is defined as equation (3) above. In this case, $\Lambda 0$ = 1, and the coefficients of the remaining x are also calculated from the positions of the additive noise.

Discrete Fourier transform of ($\Lambda 0$, $\Lambda 1$, ..., $\Lambda\nu$) yields

$$\lambda i = (1/N)\Lambda(\omega\text{-}i)$$

At this time, relationship (4) above holds.

In equation (4), $\Lambda k$, k = 0, 1, ..., $\nu$ is calculated. From $\Lambda k$ and Ek, k = 0, 1, ..., N-1, N-t, N-t+1, ..., N-1,

$$Ek, k = t, t\text{+}1, ..., N\text{-}t\text{-}1$$

is calculated.

When the number of additive noise is equal to or smaller than 2t or the number of redundant data, the magnitude of the additive noise Ek is estimated by the EST 20. If the estimated value is correct, the information signal Xk, k = t, t+1, ..., N-t-1 can be obtained by subtracting the estimated noise signal Ek, k = t, t+1, ..., N-t-1 from the received signal Vk, k = t, t+1, ..., N-t-1. When the number of additive noise components is larger than 2t or the number of redundant data, the additive noise cannot be estimated, so the EST 20 does not perform processing for estimation.

However, this case assumes that no nonlinearity is observed within the linear operation range of the reception circuit 21 at all, and only additive noise due to the model of the nonlinear operation is taken into consideration, and does not always coincide with an actual case. In an actual case, since nonlinearity to some extent is observed even within the linear operation range of the reception circuit 21, and random additive noise is also present, the estimated value of additive noise has an error.

In the second embodiment, the additive noise is not directly subtracted by the CAN 25, unlike the first embodiment. Instead, the nonlinear distortion is canceled by the following processing.

In the EST 20, IDFT processing is performed for an estimated noise block

$$E = (E0 \ E1 \ ... \ EN\text{-}1)T$$

in the frequency domain to obtain

$$e = (e0 \ e1 \ ... \ eN\text{-}1)T$$

on the time axis. This is the additive noise model of nonlinear characteristics.

When, in a signal block comprising N signals, a signal having a voltage value $\underline{x}$ is received as

$$v = x \text{ - } e$$

this signal is modeled as additive noise having a voltage value -e. The compensator (CMP) 29 is inserted between the A/D 22 and the S/P 23 to multiply the received signal value $\underline{v}$ by

$$g(v) = 1 + e/v$$

The voltage value $\underline{x}$ is given by

$$x = v + e$$

as a correct signal.

Considering that the estimated noise has an error, a coefficient $\alpha$ ($\alpha$ < 1) is set as follows to gradually correct the estimated value;

$$g(v) = 1 + \alpha e/v$$

When the above-described noise estimation is repeated for a plurality of signal blocks, the relationship of the correction gain g(v) and various reception voltage values $\underline{v}$ as shown in FIG. 8 is obtained. When the gains g(v) with respect to the voltages $\underline{v}$ are smoothly connected, the input-to-output characteristics of the CMP 29 can be obtained.

As described above, in the second embodiment, additive noise due to the nonlinear distortion is estimated by the estimater (EST) 20 using the positions and number of nonlinear distortions detected by the DET 28 and known zero symbols X0 and X7. In addition, the compensator (CMP) 29 is inserted between the A/D 22 and the S/P 23. Correction input-to-output characteristics for compensating for the nonlinear characteristics of the reception circuit 21 are set in the CMP 29 on the basis of the additive noise estimation result by the EST 20, thereby compensating for the nonlinear distortion of the reception multicarrier signal by the CMP 29.

According to the second embodiment, the nonlinear distortion of the reception multicarrier signal can be compensated for in consideration of not only the nonlinear characteristics of the reception circuit 21 but also small nonlinearity present within the linear operation range and even random additive noise. Hence, high-quality reception information data can be reproduced. In the second embodiment as well, zero symbols which have already been inserted to the two ends of a signal block are used as redundant signals to estimate the nonlinear distortion. For this reason, no new redundant signals need be added, and the transmission efficiency does not lower. Furthermore, any training signal for estimating the nonlinear characteristics is not required.

In the second embodiment, a description has been made assuming that the nonlinear distortion is generated only in the receiving-side transmission apparatus. However, a nonlinear distortion generated in the transmitting-side transmission apparatus can also be estimated and canceled together with the nonlinear distortion generated on the receiving side. In this case, the DET 28 detects the positions and number of nonlinear distortions while regarding that additive noise components are added to the reception multicarrier signal when the signal level of the reception multicarrier signal is equal to or slightly lower than the voltage at the boundary at which a nonlinear distortion occurs on the transmitting side.

In the second embodiment, zero symbols are used to estimate additive noise due to a nonlinear distortion. However, a pilot symbol for control may be used. When known control redundant data is transmitted, this data may be used.

(Third Embodiment)

The third embodiment of the present invention places its importance on a fact that in a multicarrier transmission system which multiplexes a general information signal and a priority information signal with higher priority and hierarchically transmits the signal, the priority information signal can be reliably reproduced at high probability on the receiving side because a high capability of resisting against degradation in transmission quality is imparted to the priority information signal.

More specifically, a priority information signal after error correction is used as if it were a known redundant signal, thereby estimating and canceling additive noise contained in a received block signal.

Multicarrier hierarchical transmission can be applied to, e.g., a system for broadcasting a video signal. More specifically, the high-frequency component of a video signal is transmitted as a general information signal, and the DC component, low-frequency component, and various control information are transmitted as priority information signals. With this arrangement, even when the transmission condition is bad, the receiving-side transmission apparatus can reproduce at least the DC component, low-frequency component, and various types of control information of the video signal, so minimum video information can be reproduced.

Means for imparting a high capability of resisting against degradation in transmission quality to the priority information signal are as follows.

(1) The number of multivalued data is decreased, and modulation is performed with a larger signal point distance.
(2) The signal power is increased.
(3) Powerful error correction coding is performed.

Hierarchical transmission is described in, e.g., K. Ramchandran, A. Ortega, K. Mentin Uz, and M. Varrerli "Multiresolution Broadcast for Digital HDTV Using Joint Source/Channel Coding", IEEE Journal on Selected Areas in Communications, Vol11, Nol, pp. 6 - 23, Jan. 1993.

This embodiment will be described below in detail with reference to the accompanying drawings. A description will be made on the assumption that the number N of multicarriers is 8, and two of them are used to transmit priority information while the six remaining multicarriers are used to transmit non-priority information.

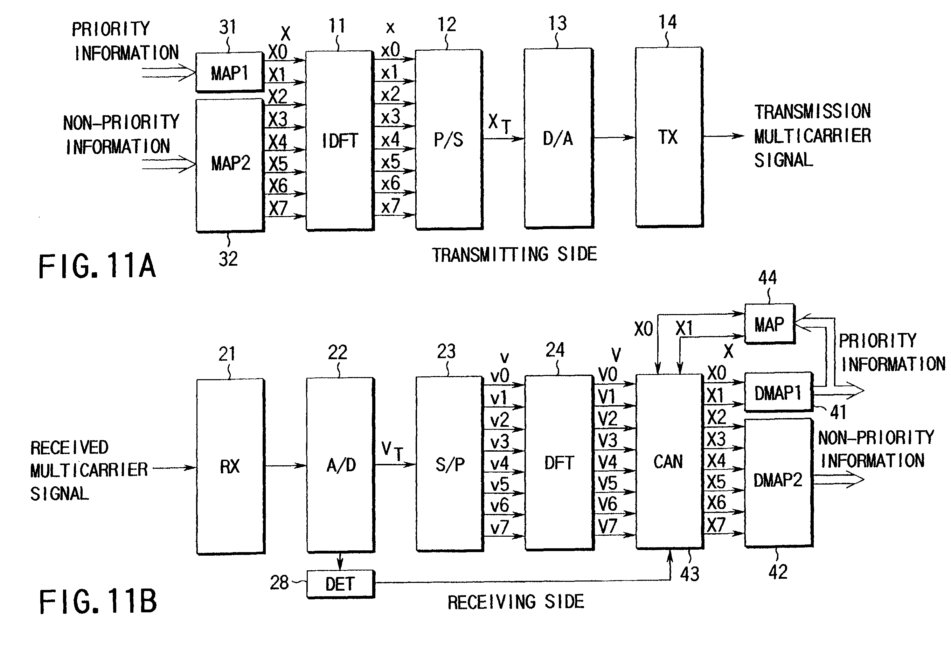

FIG. 11A is a block diagram showing a transmitting-side transmission apparatus according to this embodiment. FIG. 11B is a block diagram showing a receiving-side transmission apparatus according to this embodiment. The same reference numerals as in FIGS. 2A and 2B denote the same parts in FIGS. 11A and 11B, and a detailed description thereof will be omitted.

In the transmitting-side transmission apparatus, assume that the information bit string to be transmitted comprises a priority information bit string a

$$a = (a0\ a1\ a2\ ...)$$

and a non-priority information bit string b

$$b = (b0\ b1\ b2\ ...)$$

The priority information bit string a and non-priority information bit string b are input to a first mapping circuit (MAP1) 31 and a second mapping Circuit (MAP2) 32, respectively. The first mapping circuit 31 maps the priority information bit string a to QPSK signal points in units of 2 bits. The second mapping circuit 32 maps the non-priority information bit string b to 16QAM signal points in units of 4 bits.

QPSK and QAM are compared under a condition in which the peak power is kept unchanged. Since the distance between the QPSK signal points is three times that between the QAM signal points, QPSK is robuster against noise or distortion than QAM. Hence, even when a code error occurs in the bit string b modulated by 16QAM under a certain transmission channel condition, the bit string a modulated by QPSK will not have any errors at high probability under the same condition. However, the transmission efficiency is higher for the bit string b modulated by 16QAM.

When a signal block X input from the first and second mapping circuits 31 and 32 to an IDFT 11 is given by

$$x = (X0\ X1\ X2\ ...\ XN\text{-}1)T$$

signals corresponding to 2t (t = 1 in FIGS. 11A and 11B), i.e.,

$$(X0\ X1\ X2\ ...\ X2t\text{-}1)T$$

are information signals obtained by QPSK-modulating the priority information bit string a. The remaining signals corresponding to N-2t, i.e.,

$$(X2t\ X2t\text{+}1\ ...\ XN\text{-}1)T$$

are information signals obtained by 16QAM-modulating the non-priority information bit string b. In this case, ( )T means block transposition.

Upon receiving the N transmission block signals X, the IDFT 11 converts the transmission block signals X from signals on the frequency axis into signals on the time axis, as described in the first embodiment, so transmission block signal x on the time axis represented by equation (1) are output from the IDFT 11.

The transmission block signal x output from the IDFT 11 are converted from parallel signals into a serial signal by a parallel/serial converter (P/S) 12 and then converted into an analog signal by a digital/analog converter (D/A) 13 as a transmission multicarrier signal. This transmission multicarrier signal is frequency-converted into a multicarrier signal having a predetermined radio frequency and power-amplified to a predetermined transmission level by a transmission circuit (TX) 14, and then, transmitted from an antenna (not shown) to a radio channel.

In the receiving-side transmission apparatus, the transmission multicarrier signal transmitted from the transmitting-side transmission apparatus is received by an antenna (not shown) and input to a reception circuit (RX) 21. The received multicarrier signal is high-frequency-amplified and frequency-converted into a baseband signal by the reception circuit 21, and then, amplified by a baseband amplifier. The received signal output from the reception circuit 21 is converted into a digital signal by an analog/digital converter (A/D) 22.

When an amplifier or the like in the reception circuit (RX) 21 has nonlinear input-to-output characteristics, a nonlinear distortion as shown in, e.g., FIG. 10B occurs in the received multicarrier signal, as described in the second embodiment.

The amplitude limit operation due to the nonlinear characteristics of the amplifier or the like can be modeled as noise of -0.4V added to an input signal waveform of +1.8V, as shown in FIG. 10C. Hence, when the modeled additive noise is represented by e, an output signal block v from the reception circuit 21 is given by

$$v = x + e$$

This received block signal is converted into a digital signal by the A/D 22 and converted into N (N = 8) parallel signals v by an S/P 23. After this, each signal is input to an N-point, i.e., 8-point DFT 24 as one signal block

$$vi(i = 0, 1, ..., 7)$$

The DFT 24 converts the eight received block signals $\underline{v}$ on the time axis into signals on the frequency axis.

The received block signal V output from the DFT 24 becomes a received information signal X through a canceler (CAN) 43 to be described later. Priority information signals X0 and X1 are input to a first demapping circuit (DMAP1) 41, and non-priority information signals X2 to X7 are input to a second demapping circuit (DMAP2) 42. The first demapping circuit (DMAP1) 41 demaps the priority information data X0 and X1 mapped on signal points by QPSK to reproduce the priority information data. The second demapping circuit 42 demaps the non-priority information signals X2 to X7 mapped on signal points by 16QAM to reproduce the priority information data.

The canceler (CAN) 43 performs processing of estimating an additive noise when the received information signal X is to be estimated from the received block signal V. The procedure and contents of this estimation processing will be described below.

The output signal block V from the DFT 24 is given by

$$V = X + E$$

However,

$$E = (E0\ E1\ ...\ EN\text{-}1)T$$

is obtained by performing discrete Fourier transform of additive noise $\underline{e}$ corresponding to the nonlinear distortion. In this case,

$$(V0\ V1\ ...\ V2t\text{-}1)T$$

is a signal component obtained by QPSK-modulating the priority information bit string $\underline{a}$, so it can be assumed that the reproduced information bit string contains no error. Whether the bit string contains an error can be easily determined by adding a bit for error detection to the transmission information data.

The priority information data $\underline{a}$ containing no error, which is reproduced by the first demapping circuit 41, is input to a mapping circuit (MAP) 44 again and remodulated into a QPSK signal again and then fed back to the CAN 43. On the basis of the QPSK-modulated signal of the fed back priority information signal $\underline{a}$

$$(X0\ X1\ ...\ X2t\text{-}1)T$$

$$(E0\ E1\ ...\ E2t\text{-}1)T$$

the CAM 43 estimates

$$Ek = Vk - Xk,\ k = 0,\ 1,\ ...,\ 2t\text{-}1$$

Let $\nu$ ($\nu \leqq 2t$) be the number of nonzero elements of the N elements (ei, i = 1, 2, ..., N-1) of the noise block $\underline{e}$, and i$\mu$, $\mu$ = 1, 2, ..., $\nu$ be the positions. The position polynomial $\Lambda(x)$ of the noise is defined as equation (3) in the first embodiment. In this case, $\Lambda0 = 1$.

Discrete Fourier Transform of ($\Lambda0$, $\Lambda1$, ..., $\Lambda\nu$) yields

$$\lambda i = (1/N)\Lambda(\omega\text{-}i)$$

At this time, the relationship represented by equation (4) holds.

As described above, since

$$Ek = Vk - Xk,\ k = 0,\ 1,\ ...,\ 2t\text{-}1$$

has already been estimated,

$$\Lambda k,\ k = 0,\ 1,\ ...,\ \nu$$

can be calculated, so the position of the additive noise can be specified.

Next,

$$Ek,\ k = 2t,\ 2t+1,\ ...,\ N\text{-}1$$

is derived from $\Lambda k$, $k = 0$, $1$, ..., $\nu$ and $Ek$, $k = 0$, $1$, ..., $2t-1$.

When the number $\nu$ of additive noise components is equal to or smaller than $\underline{t}$, the positions and magnitudes of additive noise components are estimated by the canceler (CAN) 43. When the estimated noise signal $Ek$, $k = 2t$, $2t+1$, ..., N-1 is subtracted from the received signal $Vk$, $k = 2t$, $2t+1$, ..., N-1, the non-priority information bit string $Xk$, $k = 2t$, $2t+1$, ..., N-1 can be obtained.

A method of estimating the positions and magnitudes of additive noise components when the number $\nu$ of additive noise Components is equal to or smaller than $\underline{t}$ has been described above. A method of estimating the magnitudes of 2t noise components when the number $\nu$ of additive noise components is equal to or smaller than 2t, and the positions of noise components has already been estimated will be described below.

When the additive noise block $\underline{e}$ is modeled as the nonlinear operation of the amplifier in the reception circuit 21, the positions and number of signals in which the nonlinear operation has occurred can be specified. More specifically, of the N elements of the additive noise block $\underline{e}$, elements corresponding to positions where the nonlinear operation has occurred are nonzero elements, and the remaining elements are zero elements. However, the magnitudes of the nonzero elements are unknown and estimated by estimation processing later.

As described above, when the additive noise block $\underline{e}$ is modeled as the nonlinear operation of the amplifier in the reception circuit 21, the positions and number of nonzero elements of the N elements ($ei$, $i = 1$, $2$, ..., N-1) of the additive noise block $\underline{e}$ can be detected by a detector (DET) 28. As a detection method, when a signal of a certain level or more is input, this signal is determined as a signal containing the nonlinear operation.

Let $\nu$ ($\nu \leqq 2t$) be the number of nonzero elements, of the N elements ($ei$, $i = 1$, $2$, ..., N-1) of the additive noise block $\underline{e}$, and $i\mu$, $\mu = 1$, $2$, ..., $\nu$ be the positions. The coefficient $\Lambda k$, $k = 0$, $1$, ..., $\nu$ of the position polynomial $\Lambda(x)$ (equation (3)) of the noise can be directly calculated. From this coefficient $\Lambda k$, $k = 0$, $1$, ..., $\nu$ and $Ek$, $k = 0$, $1$, ..., $2t-1$, $Ek$, $k = 2t$, $2t+1$, ..., N-1 can be calculated.

When the number of additive noise components is equal to or smaller than 2t, the positions and magnitudes of additive noise components $Ek$ are estimated by the CAN 43. When the estimated noise signal $Ek$, $k = 2t$, $2t+1$, ..., N-1 is subtracted from the received signal $Vk$, $k = 2t$, $2t+1$, ..., N-1, the non-priority information bit string $Xk$, $k = 2t$, $2t+1$, ..., N-1 can be obtained. If the number of additive noise components is equal to or smaller than 2t or the number of symbols, the additive noise components cannot be estimated, so the CAN 43 does not perform processing for estimation/cancel.

As described above, in the third embodiment, of a pieces of information data having different priorities and to be hierarchically transmitted, priority information data transmitted using the QPSk modulation scheme which is relatively robust to degradation in transmission quality is used, and additive noise corresponding to a nonlinear distortion generated in a received multicarrier signal due to the nonlinear characteristics of the reception circuit 21 is estimated and canceled by the CAN 43 arranged on the output side of the DFT 24.

According to this embodiment, even when a nonlinear distortion occurs in the received multicarrier signal due to the nonlinear characteristics of the amplifier or the like in the reception circuit 21, this nonlinear distortion can be estimated and removed as additive noise. Hence, high-quality received information data can be reproduced without using any expensive amplifier with a wide linear operation range.

In addition, since the additive noise is estimated using a highly reliable priority information signal as a redundant signal, no training signal or other redundant signal need be newly transmitted. For this reason, the above effect can be obtained without lowering the transmission efficiency.

In the third embodiment, a description has been made assuming that the nonlinear distortion is generated only in the receiving-side transmission apparatus. However, a nonlinear distortion generated in the transmitting-side transmission apparatus can also be estimated and canceled together with the clip distortion generated on the receiving side. In this case, the DET 28 detects the positions and number of nonlinear distortions while regarding that additive noise is added to the reception multicarrier signal when the signal level of the reception multicarrier signal is equal to or slightly lower than the voltage at the boundary at which a nonlinear distortion occurs on the transmitting side.

In the third embodiment, $Xk$, $k = 0$, $1$, ..., $2t-1$ of one signal block is defined as priority information. However, the positions of the pieces of priority information in the block are not limited to these positions and can be arbitrarily set as far as they are set at 2t consecutive positions. For example, when the cyclic structure of the DFT is taken into consideration, the pieces of information may be placed at two ends of the block.

The positions of the pieces of priority information in the block may be changed over time. With this arrangement, even when frequency selective fading occurs in the transmission channel and largely degrades the signal having a specific frequency, the characteristics can be improved. However, to realize this, the priority information position change rule must be defined between the transmitting and receiving sides. Alternatively, information representing a change must be transmitted from the transmitting side to the receiving side or from the receiving side to the transmitting side for every transmission.

The scheme of modulating the priority information data or non-priority information data is not limited to QPSK or 16QAM.

(Fourth Embodiment)

In the third embodiment, additive noise is estimated in units of signal blocks and canceled by subtraction. This scheme assumes only additive noise as a model of the nonlinear operation, which has no nonlinearity within the linear operation range of the reception circuit 21, and this case does not always coincide with an actual case. In an actual case, since nonlinearity to some extent is observed even within the linear operation range of the reception circuit 21, and random additive noise is also present, the estimated value of additive noise has an error.

In the fourth embodiment of the present invention, the additive noise is not directly subtracted by the CAN 43, unlike the third embodiment. Instead, the nonlinear distortion is canceled by the following processing.

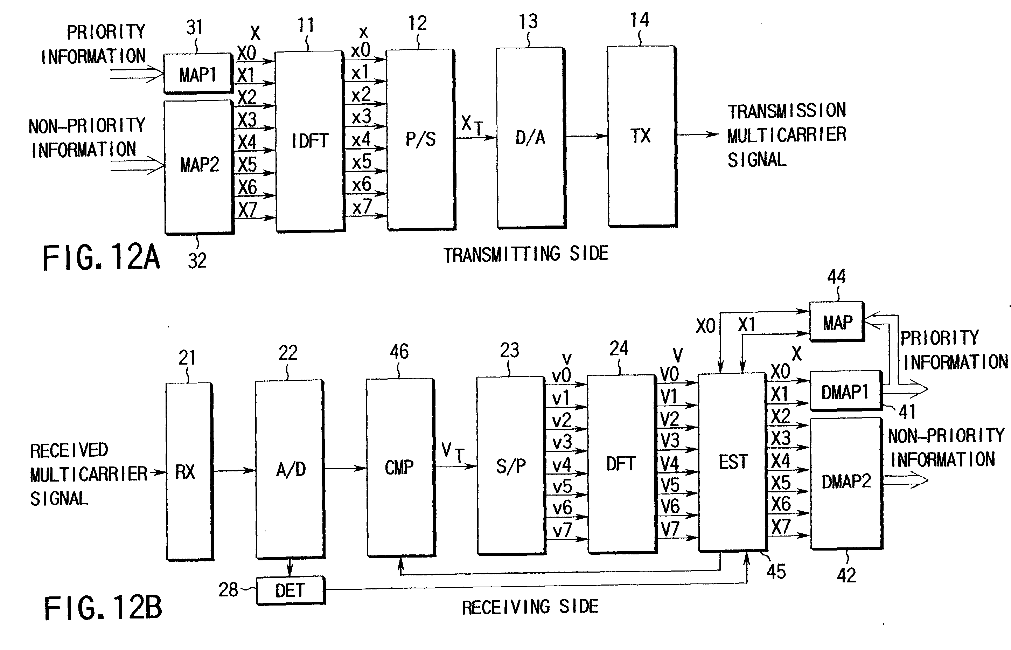

FIG. 12A is a block diagram showing a transmitting-side transmission apparatus according to the fourth embodiment. FIG. 12B is a block diagram showing a receiving-side transmission apparatus according to the fourth embodiment. The same reference numerals as in FIGS. 11A and 11B denote the same parts in FIGS. 12A and 12B, and a detailed description thereof will be omitted.

More specifically, as in the second embodiment, an estimater (EST) 45 performs IDFT processing for an estimated noise block

$$E = (E0 \ E1 \ ... \ EN\text{-}1)T$$

in the frequency domain to obtain

$$e = (e0 \ e1 \ ... \ eN\text{-}1)T$$

on the time axis. This is an additive noise model having nonlinear characteristics.

When a signal having a voltage value $\underline{x}$ is received as

$$v = x \text{ - } e$$

in a signal block comprising N signals, this is modeled as additive noise having a voltage value -e. A compensator (CMP) 46 is inserted between an A/D 22 and an S/P 23. The CMP 46 multiplies the received signal value $\underline{v}$ by a gain

$$g(v) = 1 + e/v$$

The voltage value $\underline{x}$ is given by

$$x = v + e$$

as a correct signal.

Considering that the estimated noise contains an error, a coefficient $\alpha$ ($\alpha < 1$) is set as follows to gradually correct the estimated value:

$$g(v) = 1 + \alpha e/v$$

When the above-described noise estimation is repeated for a plurality of signal blocks, the relationship of the correction gain g(v) and various reception voltage values $\underline{v}$ as shown in FIG. 9 is obtained. When the gains g(v) with respect to the voltages $\underline{v}$ are smoothly connected, the input-to-output characteristics of a CMP 29 can be obtained.

In the fourth embodiment, priority information data $\underline{a}$ reproduced by a demapping circuit 41 is remapped by a mapping circuit 44 and supplied to the estimater (EST) 45. The EST 45 estimates additive noise due to a nonlinear distortion using the remapped priority information data. In addition, the compensator (CMP) 46 is inserted between the A/D 22 and the S/P 23. Correction input-to-output characteristics for compensating for the nonlinear characteristics of the reception circuit 21 are set in the CMP 46 on the basis of the additive noise estimation result by the EST 45, thereby compensating for the nonlinear distortion of the reception multicarrier signal by the CMP 46.

According to this embodiment, the nonlinear distortion of the reception multicarrier signal can be compensated for in consideration of not only the nonlinear characteristics of the reception circuit 21 but also small nonlinearity present within the linear operation range or random additive noise. Hence, high-quality reception information data can be reproduced. In this embodiment as well, of pieces of information data hierarchically transmitted, the remapped data of the priority information data $\underline{a}$ which is robust against degradation in transmission quality is used as redundant data to estimate the nonlinear distortion. No training signal or new redundant data need be used, so the nonlinear distortion can be estimated and canceled without lowering the transmission efficiency.

In the above embodiment, to obtain priority information data robust against degradation in transmission quality, a modulation scheme such as QPSK which decreases the number of multivalued data to increase the distance between signal points is employed. However, the modulation scheme is not limited to this, and a powerful error correction coding scheme with larger signal power setting may be employed.

In the fourth embodiment, a description has been made assuming that the nonlinear distortion is generated only in the receiving-side transmission apparatus. However, a nonlinear distortion generated in the transmitting-side transmission apparatus can also be estimated and canceled together with the nonlinear distortion generated on the receiving side. In this case, the DET 28 detects the positions and number of nonlinear distortions while regarding that additive noise is added to the reception multicarrier signal when the signal level of the reception multicarrier signal is equal to or slightly lower than the voltage at the boundary at which a nonlinear distortion occurs on the transmitting side.

(Fifth Embodiment)

In the fifth embodiment of the present invention, inverse discrete Fourier transform (IDFT) and discrete Fourier transform (DFT) are used not only to generate an OFDM signal comprising N carrier signals but also to estimate and cancel an additive distortion in a transmitting-side transmission apparatus.

Additionally, the additive distortion is estimated and canceled using, as redundant signals, zero symbol carriers arranged at two end portions of the OFDM signal.

This embodiment will be described below in detail with reference to the accompanying drawings. A description will be made assuming that the number N of multicarriers is 8, and two null signals are inserted to each of the two end portions of the transmission band as known redundant signals between the transmitter and receiver.

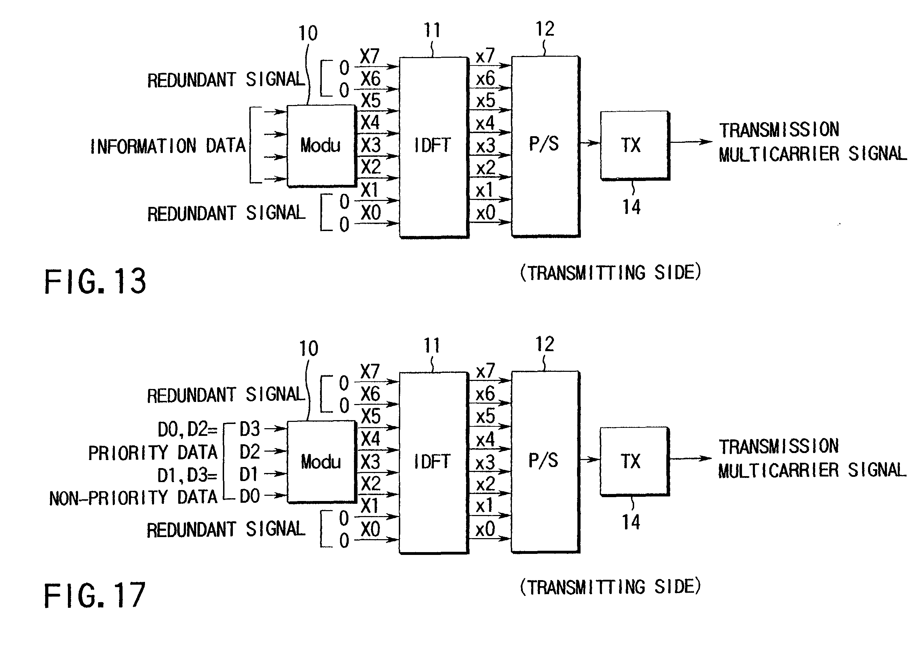

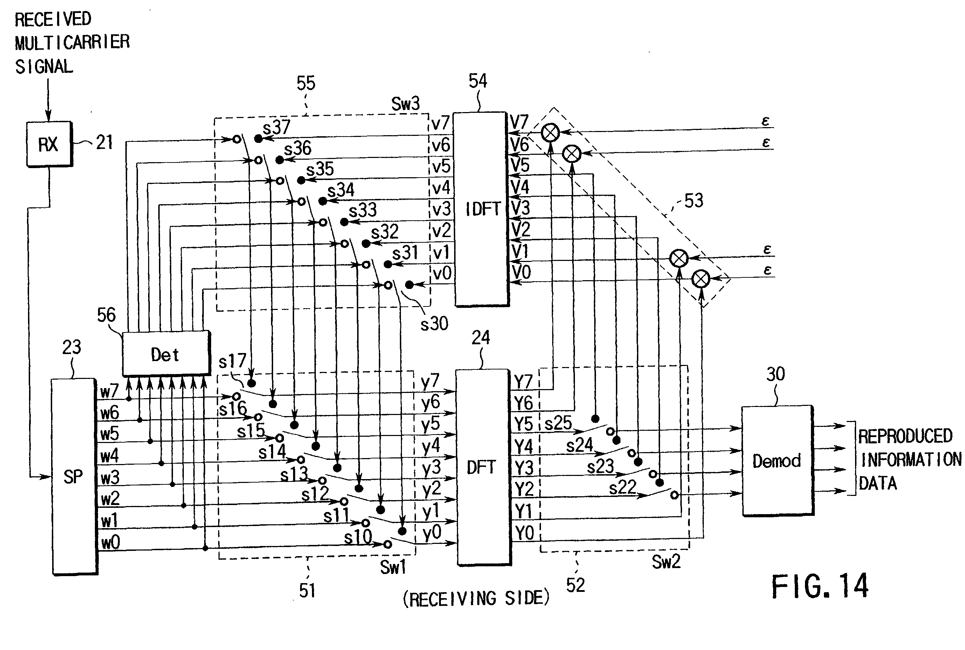

FIGS. 13 and 14 are block diagrams showing transmitting- and receiving-side transmission apparatuses according to this embodiment, respectively. The same reference numerals as in FIGS. 2A and 2B denote the same parts in FIGS. 13 and 14.

In the transmitting-side transmission apparatus, four pieces of information data are input to a modulator (Modu) 10 and mapped in a complex signal point space in accordance with a modulation rule of PSK or QAM. Four modulated information signals X2, X3, X4, and X5 are input to an 8-point IDFT 11 together with four redundant signals X0, X1, X6, and X7 as null signals as a transmission block signal (X0 X1 ... X7) comprising eight elements. The IDFT 11 converts the transmission block signal from a signal on the frequency axis into signals on the time axis and outputs the converted signals as transmission block signals (x0 x1 ... x7). In this case,

$$x_m = \frac{1}{8} \sum_{k=0}^{7} e^{j2\pi mk/8} X_k, \; m = 0, 1, ..., 7 \tag{5}$$

The transmission block signals (x0 x1 ... x7) on the time axis are converted from parallel signals into a serial signal by a parallel/serial converter (P/S) 12, converted into an analog signal by a digital/analog converter (D/A) (not shown), frequency-converted into a radio frequency in the transmission band and amplified to a predetermined transmission power level by a transmitter (TX) 14, and transmitted from an antenna to a channel.

In the receiving-side transmission apparatus, the multicarrier signal sent through the channel is received by a receiver (RX) 21, frequency-converted into a baseband signal, converted into a digital signal by an analog/digital converter (A/D) (not shown), and input to a serial/parallel converter (S/P) 23. The S/P 23 converts the received signal into parallel received block signals (w0 w1 ... w7). Assuming that additive noise components (e0 e1 ... eN-1) are added through the transmission system, the received block signals (w0 w1 ... w7) are represented by

$$wm = xm + em, \; m = 0, 1, ..., 7$$

Received block signals wm are input to an 8-point DFT 24 as (y0 y1 ... y7). That is

$$ym = wm, \; m = 0, 1, ..., 7$$

The DFT 24 converts received block signals ym from signals on the time axis into signals on the frequency axis and outputs them as (Y0 Y1 ... YN-1). In this case,

$$Y_k = \sum_{m=0}^{N-1} e^{-j2\pi mk/8} y_m, \; k = 0, 1, ..., 7 \tag{6}$$

The output from the DFT 24 is represented as

$$Yk = Xk + Ek, k = 0, 1, ..., 7$$

In this case, (E0 E1 ... E7) is the DFT output of additive noise. If the additive noise is zero,

$$Yk = Xk, k = 0, 1, ..., 7$$

When Y2, Y3, Y4, and Y5 are input to a demodulator (Demod) 30, transmission information data is reproduced.

The transmission block signal is generated by multiplexing eight signals on the frequency axis. As the number of multiplexed signals (N) is large, the amplitude variation becomes large.

The transmitter or receiver has various analog circuits such as a digital/analog converter, an analog/digital converter, and an amplifier. These analog circuits have limited linear operation range of the signal amplitude, and a distortion occurs in a signal with an amplitude larger than a certain value. In a digital/analog converter or analog/digital converter, the operation range is limited by the number of bits. An increase in the linear operation range or accuracy of an analog circuit results in an increase in cost, and this poses a serious problem.

The amplitude limit operation due to the nonlinear distortion can be modeled as noise added to an input signal, as shown in FIGS. 10A to 10C. Hence, when the amplitude limitation due to nonlinearity is modeled as the sum of the transmission block signals (x0 x1 ... x7) and noise components (e0 e1 ... e7), output block signals (w0 w1 ... w7) from the nonlinear circuit can be represented as

$$wm = xm + em, m = 0, 1, ..., 7$$

As an example, assume that additive noise is the model of the nonlinear operation of the amplifier in the receiver. Since it can be assumed that the nonlinear operation occurs for a signal having a large amplitude, the positions and number of signals in which the nonlinear operation has occurred can be specified.

The positions and number of nonzero elements of the eight elements (e0 e1 ... e7) of the noise are estimated to be equal to the positions and number of sample points of a received signal of a certain level or more by a detector (Det) 56. However, the magnitude of each nonzero element is unknown and estimated by estimation processing later.

In this embodiment, the transmission block signal Xk, k = 0, 1, ..., 7 is estimated from the received block signal Yk, k = 0, 1, ..., 7 output from the DFT 24.

Referring to FIG. 14, when all elements of the received block signal wm, m = 0, 1, ..., 7 input from the S/P 23 to the detector 56 have levels lower than a predetermined level, it is regarded that no noise is added, i.e., noise em = 0, m = 0, 1, ..., 7, and switches S10, S11, ..., S17 of a first switch circuit (Sw1) 51 are connected to contacts indicated by hollow bullets. For this reason,

$$ym = wm = xm, m = 0, 1, ..., 7$$

is input to the DFT 24, and consequently, the DFT 24 outputs Yk = Xk, k = 0, 1, ..., 7 on the basis of

$$Y_k = \sum_{m=0}^{7} e^{-j2\pi mk/8} y_m, \ k = 0, 1, ..., 7 \qquad (7)$$

At this time, all switches S22, S23, S24, and S25 of a second switch circuit (Sw2) 52 are connected to contacts on the hollow bullet side. For this reason, of the received block signals output from the DFT 24, Y2, Y3, Y4, and Y5 corresponding to information signals are input to the demodulator (Demod) 30 and demodulated to reproduce the information data.

Switching of the first and second switch circuits (Sw1 and Sw2) 51 and 52 is controlled by the detector 56.

Assume that w3 and w6 of the elements of the received block signal wm, mm = 0, 1, ..., 7 input from the S/P 23 to the detector 56 exceeds a predetermined amplitude level. That is, assume that the elements w3 and w6 contain additive noise due to nonlinear distortions.

In this case, first, all the switches S10, S11, ..., S17 of the first switch circuit (Sw1) 51 are temporarily connected to the contacts represented by hollow bullets, so

$$ym = wm, m = 0, 1, ..., 7$$

is input to the DFT 24 as an initial value. Steps 1 and 2 are repeated as follows.

(Step 1)

All the switches S22, S23, S24, and S25 of the second switch circuit (Sw2) 52 are connected to contacts on the bullet side. For this reason, the elements Y0, Y1, Y2, Y3, Y4, Y5, Y6, and Y7 of the received block signal Yk output from the DFT 24 are input to an IDFT 54. At this time, of the elements of the received block signal, Y2, Y3, Y4, and Y5 corresponding to information signals are directly input to the IDFT 54 while Y0, Y1, Y6, and Y7 corresponding to redundant signals are multiplied by a coefficient ε by a multiplier 53 to input

$$Vk = \varepsilon Yk, k = 0, 1, 6, 7$$

to the IDFT 54.

The coefficient ε is set to be 0 in accordance with the known redundant signals (null signals). Hence, of the elements of the received block signal, Y0, Y1, Y6, and Y7 are multiplied by ε = 0 by the multiplier 53, set to be 0, and input to the IDFT 54. More specifically, even when the elements Y0, Y1, Y6, and Y7 output from the DFT 24 contain additive noise due to nonlinear distortions, these elements are replaced with the known redundant signals (null signals) as the original values.

In actual transmission, in consideration of not only the additive noise as the model of the nonlinear operation but also random additive noise due to the transmission channel condition, ε ≠ 0 is set to give a very small value.

(Step 2)

The IDFT 54 converts the received block signal

$$Vk, k = 0, 1, ..., 7$$

in which Y0, Y1, Y6, and Y7 are replaced with the redundant signals (null signals) as the original values from the signal on the frequency axis into a signal on the time axis again and outputs it as

$$\upsilon_m = \sum_{k=0}^{7} e^{j2\pi mk/8} Y_k, m = 0, 1, ...,7 \tag{8}$$

At this time, in a third switch circuit (Sw3) 55, only switches S33 and S36 corresponding to the elements w3 and s6 from which additive noise is detected are connected to contacts on the bullet side, and the remaining switches are connected to contacts on the hollow bullet side under the control of the detector 56. At the same time, all the switches S10, S11, ..., S17 of the first switch circuit (Sw1) 51 are connected to the contacts on the bullet side. For this reason,

$$ym = Wk, k = 0, 1, 2, 4, 5, 7$$

and

$$ym = Vk, k = 3, 6$$

are input to the DFT 24.

More specifically, this time, of the received block signals w0, w1, ..., w7, the signal elements w3 and w6 influenced by the nonlinear operation are replaced with the signal elements v3 and v6 obtained when the redundant signals are replaced with null signal by the multiplier 53 and reconverted by the IDFT 54, i.e., the signals ym are input to the DFT 24 and converted into signals on the time axis.

Steps 1 and 2 are repeated a predetermined number of times. When the repetitive processing is ended, all the switches S22, S23, S24, and S25 of the second switch circuit (Sw2) are switched to the contacts on the bullet side by the detector 56. As a result, of the received block signals output from the DFT 24, Y2, Y3, Y4, and Y5 corresponding to the information signals are input to the demodulator (Demod) 30 to reproduce the information data.

The detector 56 or a control section equivalent to the detector 56 determines whether, of the signal elements contained in the received block signal output from the S/P 23, the number of signal elements added with nonlinear distortions over a predetermined level is larger than, equal to, or smaller than "4" or the number of redundant signals inserted on the transmitting side. When the number of signal elements is equal to or smaller than "4" or the number of redundant signals, operation of steps 1 and 2 is executed. When the number of signal elements is larger than "4" or the number of redundant signals, the estimation error becomes large, so another processing may be performed instead of processing of steps 1 and 2.

As described above, in this embodiment, the IDFT and DFT are used not only to multiplex and demultiplex N signals but also to estimate and cancel additive noise in the receiving-side transmission apparatus. Even when a signal error due to nonlinearity or the like of the transmission apparatus is contained in the received multicarrier signal, this signal error is corrected by correction processing using the DFT 24 and IDFT 54. In addition, 2t redundant signals used for this correction processing are null signals which have been inserted into the transmission block signal in advance but are not newly added. For this reason, an independent training signal need not be inserted into the transmission block signal for correction, so the transmission efficiency is not lowered.

(Sixth Embodiment)

In the sixth embodiment of the present invention, the apparatus described in the fifth embodiment is further improved. The number of signal points of a DFT and IDFT used to correct a signal error due to nonlinearity is decreased to reduce the calculation amount required for correction processing.

More specifically, assume that a signal block (y0 y1 ... yN-1) comprising N elements is input to an N-point DFT to obtain a received block signal (Y0 Y1 ... YN-1) on the time axis as

$$Y_k = \sum_{m=0}^{N-1} \alpha^{mk} y_m, \; k = 0, 1, ..., N - 1 \qquad (9)$$

$$\alpha = e^{-j2\pi/N}$$

Subsequently, when N = KM,

$$u_m = y_m + y_{m+M} + \cdots + \upsilon_{m+(K-1)M} \qquad (10)$$

$$= \sum_{\ell=0}^{K-1} y_{m+\ell M}, \; m = 0, 1, ..., M-1$$

At this time, when a signal block (u0 u1 ... uM-1) comprising M elements is input to an M-point DFT, a signal block (U0 U1 ... UM-1) output from the DFT is represented by

$$U_k = \sum_{m=0}^{M-1} \beta^{mk} u_m, \; k = 0, 1, ..., M - 1 \qquad (11)$$

$$\beta = e^{-j2\pi/M}$$

This equation can be rewritten as follows:

$$U_k = \sum_{m=0}^{M-1} \beta^{mk} \sum_{\ell=0}^{K-1} y_{m+\ell M} \qquad (12)$$

$$= \sum_{m=0}^{MK-1} \beta^{mk} u_m$$

$$= \sum_{m=0}^{N-1} \alpha^{mkK} u_m, \; k = 0, 1, ..., M - 1$$

From this equation, a relationship

$$Uk = TkK, k = 0, 1, ..., M-1$$

can be obtained.

This means that M elements (Y0 Y1 ... Y(M-1)K) of a signal block (Y0 Y1 ... YN-1) comprising N elements are obtained from the output (U0 U1 ... UM-1) from the DFT when (u0 u1 ... uM-1) are input to the M-point DFT. In this embodiment, an importance is placed on this point, and the calculation amount is decreased.

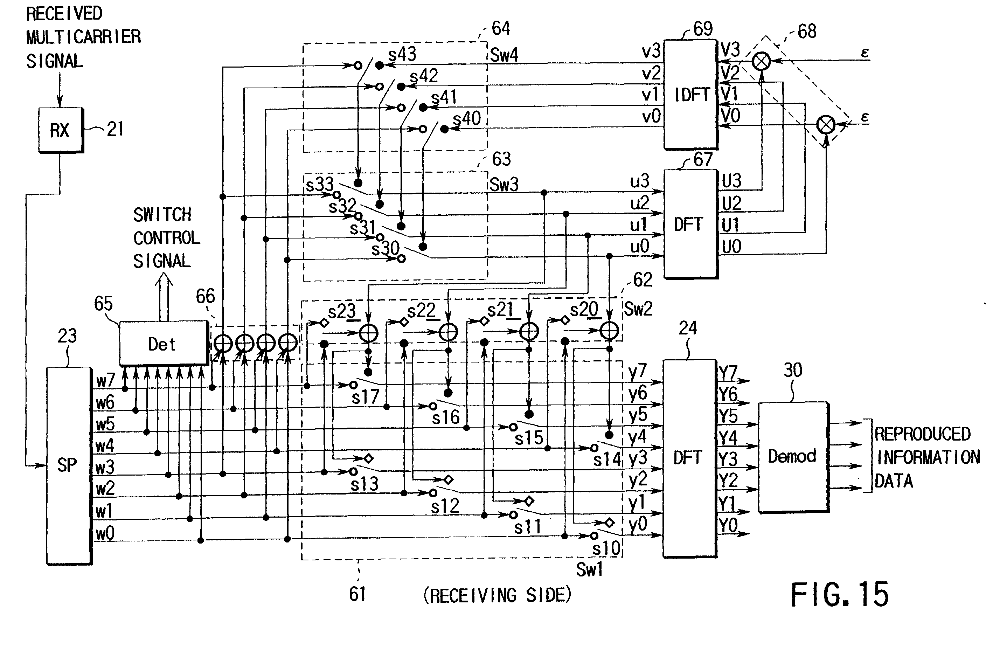

FIG. 15 is a block diagram showing the arrangement of a receiving-side transmission apparatus according to the sixth embodiment of the present invention. The same reference numerals as in FIG. 14 denote the same parts in FIG. 15.

A case wherein N = 8, M = 4, and K = N/M = 2 will be described below.

A received block signal wm, m = 0, 1, ..., 7 output from an S/P 23 is input to a detector (Det) 65 to determine the amplitude level. When all elements of the received block signal wm have amplitudes smaller than a predetermined amplitude level, it is determined that no nonlinear operation is added, i.e., em = 0, m = 0, 1, ..., 7, and all switches S10, S11, ..., S17 of a first switch circuit (Sw1) 61 are connected to contacts on the hollow bullet side. For this reason, the received block signal wm, m = 0, 1, ..., 7 output from the S/P 23 is input to a DFT 24 as ym, m = 0, 1, ..., 7 and converted from a signal on the time axis into a signal Ym, m = 0, 1, ..., 7 on the frequency axis.

More specifically, in this case,

$$ym = wm = xm, m = 0, 1, ..., 7$$

and Yk = Xk, k = 0, 1, ..., 7 is obtained from the DFT 24 on the basis of

$$Y_k = \sum_{m=0}^{7} e^{-j2\pi mk/8} y_m, \quad k = 0, 1, ..., 7 \tag{13}$$

Of the received block signal Yk = Xk, k = 0, 1, ..., 7 output from the DFT 24, four signals Y2, Y3, Y4, and Y5 corresponding to information signals are input to a demodulator (Demod) 30 and demodulated to reproduce information data.

Assume that any one of elements of the received block signal wm, m = 0, 1, ..., 7 input from the S/P 23 to the detector (Det) 65 has an amplitude larger than a predetermined amplitude level due to the nonlinear operation of a receiver 21. A description will be made herein assuming that, e.g., elements w3 and w6 have amplitudes larger than a predetermined level.

In this case, all switches S30, S31, S32, and S33 of a third switch circuit (Sw3) 63 are temporarily connected to contacts indicated by hollow bullets, and

$$um = wm + wm+4, m = 0, 1, 2, 3$$

is input to a DFT 67 as an initial value. Steps 1 and 2 are repeated as follows.

(Step 1)

From the 4-point DFT 67,

$$U_k = \sum_{m=0}^{3} e^{-j2\pi mk/4} u_m, \quad k = 0, 1, 2, 3 \tag{14}$$

is output. The output signal from the DFT 67 is input to a 4-point IDFT 69. Of the elements of a signal Uk, k = 0, 1, 2, 3 input to the 4-point IDFT 69, two elements Uk, k = 1, 2 positioned inside are directly input to the IDFT 69 as Vk, k = 1, 2. The two remaining elements Uk, k = 0, 3 positioned at the two ends are multiplied by a coefficient ε by a multiplier 68 and input to the IDFT 69 as Vk = ε Uk, k = 0, 3.

The coefficient ε is set to be 0 to make Uk, k = 0, 3 of the outputs from the DFT 67 V0 = V3 = 0 in correspondence with known redundant signals (null signals). However, ε ≠ 0 is preferably set to give a very small value in consideration of the fact that assumption in which only additive noise as the model of the nonlinear operation, which has no nonlinearity, is taken into consideration within the linear operation range of the transmission system is not strictly established in an actual transmission channel.

(Step 2)

From the 4-point IDFT 69,

$$\upsilon_m = \sum_{k=0}^{3} e^{j2\pi mk/4} V_k, \; m = 0, 1, 2, 3 \tag{15}$$

is output. At this time, switches S40 and S41 of a fourth switch circuit (Sw4) 64 are connected to contacts on the hollow bullet side, and remaining switches S42 and S43 are connected to contacts on the bullet side. Setting of these switches is controlled by the detector 65.

For this reason, two of the four signals input to the 4-point DFT 67 are

$$um = wm, \; m = 0, 1$$

The two remaining signals are

$$um = vm, \; k = 2, 3$$

The reason why the third and fourth switch circuits (Sw3 and Sw4) are set in the above way is as follows. Of the signals vm, m = 0, 1, 2, 3 output from the 4-point IDFT 69, v2 and v3 are elements added with, the nonlinear operation, and the remaining v0 and v1 are elements which are not added with the nonlinear operation. The true values are w0 + w4 and w1 + w5. The elements are replaced with these values and input to the DFT 67.

Steps 1 and 2 are repeated a predetermined number of times. When the repetitive processing is ended, of the switches of the first switch circuit (Sw1), the switches S10, S11, S12, S14, S15, and S17 are connected to the contacts on the hollow bullet side, the switch S13 is connected to the rhombic contact, and the switch S16 is connected to the bullet contact. Simultaneously, the switch S23 of the second switch circuit (Sw2) is connected to the rhombic contact, and the switch S22 is connected to the bullet contact.

Hence, w0, w1, w2, u3, w4, w5, u2, and w7 are input to the DFT 24 and converted from signals on the time axis into signals on the frequency axis. Of the output signals Yk, k = 0, 1, ..., 7 from the DFT 24, Y2, Y3, Y4, and Y5 corresponding to information signals are input to the demodulator (Demod) 30 and demodulated into information data.

In the sixth embodiment, the positions and number of elements having large amplitudes added with the nonlinear operation must be detected from the signals elements um, m = 0, 1, 2, 3.

On the basis of

$$um = wm + wm+4, \; m = 0, 1, 2, 3$$

um added with the nonlinear operation can be determined from wm(i) added with the nonlinear operation. When um is corrected by repeating steps 1 and 2 in the second embodiment, and one of the elements (wm wm+4) corresponding to um is added with the nonlinear operation, wm can be corrected from the one-to-one correspondence on the basis of the correction result.

Generally, when one of the elements (wm wm+4 ... wm+(K-1)M) corresponding to um(i) is added with the nonlinear operation, wm can be corrected from the one-to-one correspondence.

As M becomes smaller, the calculation amount can be decreased by reducing the number of points of the DFT 67 and IDFT 69 in steps 1 and 2. However, the probability that the one-to-one correspondence is established becomes low. Hence, when the number and positions of elements added with the nonlinear operation are detected, and the optimum value of M, i.e., the number of points of the DFT 67 and IDFT 69 in steps 1 and 2 is selected on the basis of the detection result, calculation can be efficiently performed.

(Seventh Embodiment)

In the seventh embodiment of the present invention, the apparatus of the sixth embodiment is further simplified. A DFT and IDFT each having a smaller number of signal points are used, and only specific signal elements of a plurality of signal elements contained in a received multicarrier signal are corrected with their nonlinear distortions and demodulated by a demodulator.

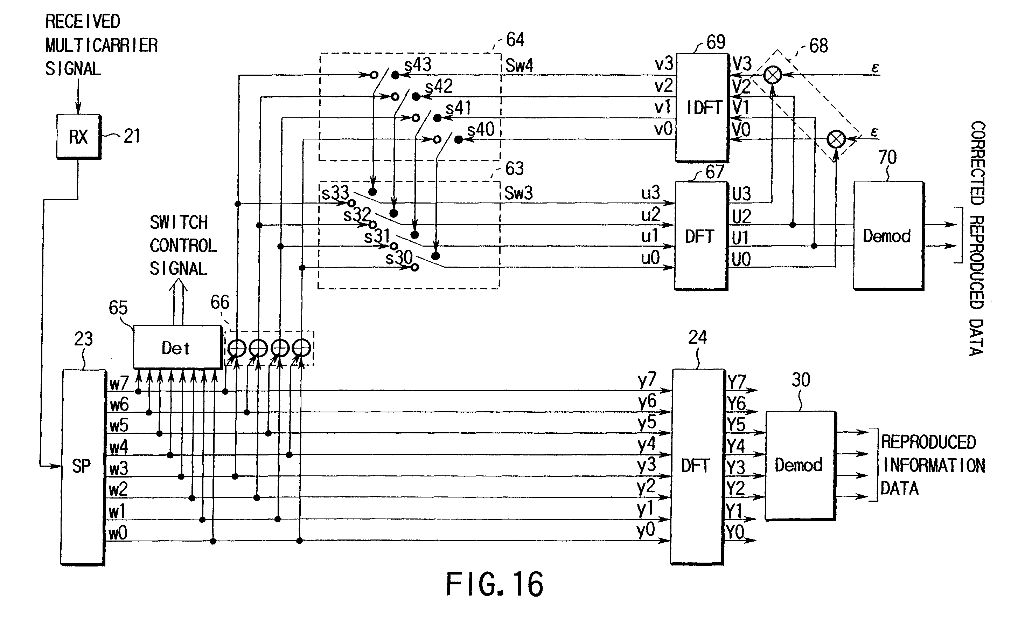

FIG. 16 is a block diagram showing the arrangement of a receiving-side transmission apparatus according to the seventh embodiment of the present invention. The same reference numerals as in FIG. 15 denote the same parts in FIG. 16, and a detailed description thereof will be omitted.

A received block signal $wm$, $m = 0, 1, ..., 7$ output from an S/P 23 is directly input to an 8-point DFT 24 and converted from a signal on the time axis into a signal $Yk$, $k = 0, 1, ..., 7$ on the frequency axis. Of the received block signal $Yk = Xk$, $k = 0, 1, ..., 7$ output from the DFT 24, four signals Y2, Y3, Y4, and Y5 corresponding to information signals are input to a demodulator (Demod) 30 and demodulated to reproduce all information data. However, the demodulated data are obtained by directly demodulating the signals without any correction even when nonlinear distortions are contained in the received block signal output from the S/P 23.

All switches S30, S31, S32, and S33 of a switch circuit (Sw3) 63 are temporarily initially set to contact indicated by hollow bullets. The elements of received block signal $wm$, $m = 0, 1, ..., 7$ output from the S/P 23 are added by an addition circuit 66 and input to a DFT 67 as

$$um = wm + wm+4, m = 0, 1, 2, 3$$

Processing of step 1 described in the sixth embodiment is performed.

The output signals from the DFT 67 are input to a 4-point IDFT 69. Of signals $Uk$, $k = 0, 1, 2, 3$ input to the 4-point IDFT 69, two elements $Uk$, $k = 1, 2$ positioned inside are directly input to the IDFT 69 as $Vk$, $k = 1, 2$. The two remaining elements $Uk$, $k = 0, 3$ positioned at the two ends are multiplied by a coefficient $\varepsilon$ as an control signal by a multiplier 68 and input to the IDFT 69 as $Vk = \varepsilon Uk$, $k = 0, 3$.

The coefficient $\varepsilon$ is set to be 0 to make $Uk$, $k = 0, 3$ of the outputs from the DFT 67 V0 = V3 = 0 in correspondence with known redundant signals (null signals), as described in the fifth and sixth embodiments. However, $\varepsilon \neq 0$ is preferably set to give a very small value in consideration of the fact that assumption in which only additive noise as the model of the nonlinear operation, which has no nonlinearity, is taken into consideration within the linear operation range of the transmission system is not strictly established in an actual transmission channel.

Subsequently, processing of step 2 is executed. The received block signal on the time axis, which is represented by equation (15), is output from the 4-point IDFT 69. At this time, switches S40 and S41 of a switch circuit (Sw4) 64 are connected to contacts on the hollow bullet side, and remaining switches S42 and S43 are connected to contacts on the bullet side. All switches S30, S31, S32, and S33 of switch (Sw3) 63 are connected to contacts on the bullet side. Setting of these switches is controlled by a detector 65.

For this reason, two of the four signals input to the 4-point DFT 67 are

$$ym = wm, m = 0, 1$$

The two remaining signals are

$$ym = vm, k = 2, 3$$

The reason why the switch circuits (Sw3 and Sw4) are set in the above way is as follows. Of the signals $vm$, $m = 0, 1, 2, 3$ output from the 4-point IDFT 69, v2 and v3 are elements added with the nonlinear operation, and the remaining v0 and v1 are elements which are not added with the nonlinear operation. The true values are w0 + w4 and w1 + w5. The elements are replaced with these values and input to the DFT 67.

Correction processing of steps 1 and 2 is repeated a predetermined number of times. When the repetitive processing is ended, of signals U0, U1, U2, and U3 output from the DFT 67, two elements $Uk$, $k = 1, 2$ corresponding to information signals are input to a demodulator 70 and demodulated by the demodulator 70. These modulated data are corrected in their nonlinear distortions by repetitive correction processing of steps 1 and 2.

According to this apparatus, errors due to nonlinear distortions cannot be corrected for all symbols, unlike the sixth embodiment. However, for symbols corresponding to specific signal elements in the received block signal, errors due to nonlinear distortions can be corrected. In addition, the circuit arrangement and control can be simplified because the first and second switch circuits shown in the sixth embodiment and switching control therefor are omitted.

(Eighth Embodiment)

In the eighth embodiment of the present invention, when information data is to be hierarchically transmitted from the transmitting side to the receiving side while classifying the data into priority data and non-priority data, in the transmitting-side transmission apparatus, the priority data are arranged at predetermined positions of signal elements of a transmission block signal, converted into signals on the time axis by an IDFT, and transmitted as multicarriers. On the other hand, in the receiving-side transmission apparatus, the received block signal on the time axis is input to a DFT and IDFT with a smaller number of signal points than that of the above IDFT. After signal errors due to nonlinear distortions are corrected by repetitive correction processing by the DFT and IDFT, the signals are demodulated to reproduce only the priority data.

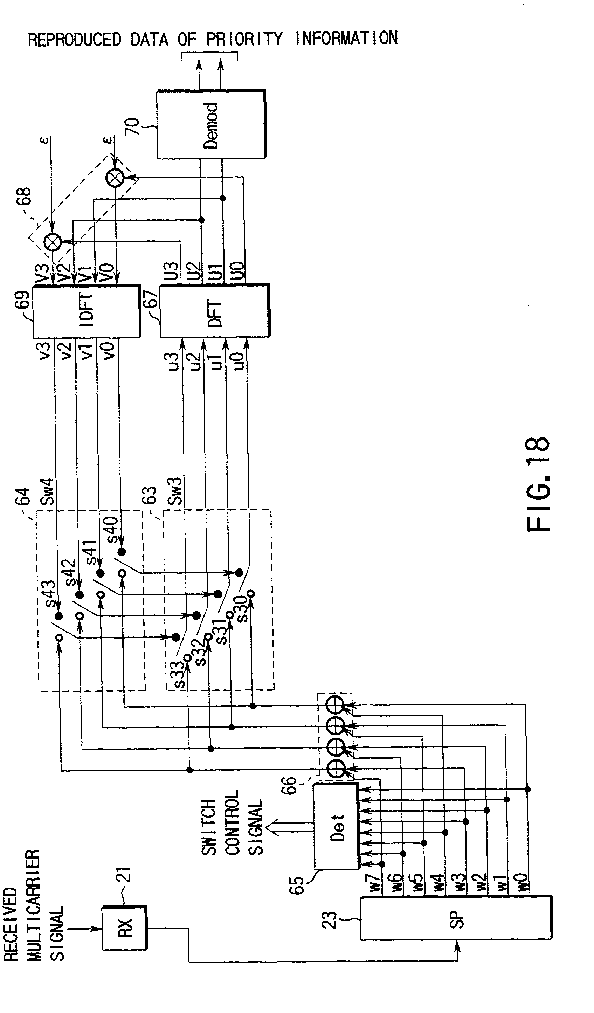

FIGS. 17 and 18 show the arrangement of a multicarrier transmission system according to the eighth embodiment of the present invention. FIG. 17 shows the transmitting-side transmission apparatus, and FIG. 18 shows the receiving-side transmission apparatus. The same reference numerals as in FIGS. 13 and 16 denote the same parts in FIGS. 17 and 18, and a detailed description thereof will be omitted.

In the transmitting-side transmission apparatus, of four information data hits D0, D1, D2, and D4 input to a modulation circuit 10, priority data are arranged at D0 and D2, and non-priority data are arranged at D1 and D3. As the priority data, important data necessary for video signal reproduction, e.g., the information of the DC component or low-frequency component of a video signal are assigned. As the non-priority data, information data which is not always necessary for video signal reproduction but is used to obtain a higher video quality, e.g., a high-frequency component of a video signal is assigned.

The priority data and non-priority data assigned to signal positions are mapped in a complex signal space in accordance with the modulation rule of PSK or QAM by the modulator (Modu) 10, and input to an 8-point IDFT 11 as a transmission block signal (X0 X1 ... X7) comprising eight elements together with four redundant signals as null signals. The IDFT 11 converts the transmission block signal from a signal on the frequency axis into a signal on the time axis. Transmission block signals (x0 x1 ... x7) are converted from parallel signals into a serial signal by a parallel/serial converter (P/S) 12, converted into an analog signal by a digital/analog converter (not shown), and transmitted from a transmitter (TX) 14 to a transmission channel.

In the receiving-side transmission apparatus, the multicarrier signal transmitted through the transmission channel is received and frequency-converted into a baseband signal by a receiver (RX) 21, converted into a digital signal by an analog/digital converter (not shown), and converted into parallel received block signals (w0 w1 ... w7) by a serial/parallel converter (S/P) 23. The received block signal (w0 w1 ... w7) is input to a detector (Det) 65 to determine the amplitude level.

The received block signal (w0 w1 ... w7) is also input to an addition circuit 66. Signal elements w0 and w4, w1 and w5, w2 and w6, and w3 and w7 are added into signals u0, u1, u2, u3 comprising four signal elements. A signal comprising four signal elements u0, u1, u2, u3 is input to a 4-point DFT 67 through a switch circuit 63 and converted into signals on the frequency axis. Of the signals Uk, k = 0, 1, 2, 3 input to the 4-point IDFT 69, two elements Uk, k = 1, 2 positioned inside are directly input to the IDFT 69 as Vk, k = 1, 2. The two remaining elements Uk, k = 0, 3 positioned at the two ends are multiplied by a coefficient ε by a multiplier 68 and input to the IDFT 69 as Vk = ε Uk, k = 0, 3. The coefficient ε is set to be 0 in correspondence with redundant signals ( null signals). Under the actual transmission condition, various kinds of noise are contained, so the coefficient ε is set in consideration of the noise components.

Assume that of signals vm, m = 0, 1, 2, 3 output from the 4-point IDFT 69, v2 and v3 are elements added with the nonlinear operation, and the remaining v0 and v1 are elements which are not added with the nonlinear operation. In this case, switches S40 and S41 of a switch circuit (Sw4) 64 are connected to contacts on the hollow bullet side, and remaining switches S42 and S43 are connected to contacts on the bullet side by the detector 65. All switches S30, S31, S32, and S33 of the switch (Sw3) 63 are connected to contacts on the bullet side.

For this reason, two of the four signals input to the 4-point DFT 67 is

$$um = wm, m = 0, 1$$

The two remaining signals are

$$um = vm, k = 2, 3$$

More specifically, by switching the switch circuits 64 and 63, of the signals output from the S/P 23, signal elements containing the influence of nonlinear distortions are replaced with signal elements corrected by the multiplier 68 and IDFT 69 and input to the DFT 67.

Of the signals reconverted into signals on the frequency axis by the DFT 67, signal elements U1 and U2 are input to a demodulator 70 and demodulated into reproduced data of the priority information.

According to this embodiment, in the receiving-side transmission apparatus, the priority data can be corrected by the correction circuit having the 4-point DFT 67 and IDFT 69 and then demodulated. More specifically, of a number of information data of a video signal, at least the priority data can be corrected with a small calculation amount using the DFT and IDFT having a smaller number of signal points and reproduced. Hence, the calculation amount in the receiving-side transmission apparatus can be largely reduced while allowing at least information reproduction based on the priority information.

In the above description, in the transmitting-side transmission apparatus, the priority data are inserted at D0 and D2. However, the priority data may be inserted at D1 and D3 and transmitted. In this case, however, the receiving-side transmission apparatus need have a multiplier for multiplying the data by a predetermined coefficient on the input side of the adder 66.

(Other Embodiments)

In the fifth and sixth embodiments, repetitive processing of steps 1 and 2 is performed a predetermined number of times. However, by monitoring whether the level of a signal element, which is higher than a predetermined level due to the nonlinear operation, lowers to the predetermined level or less by repetitive processing, the repetitive processing may be ended at the time point when the decrease is detected.

In the sixth embodiment, the repetitive processing operation of steps 1 and 2 is executed always using the 4-point DFT 67 and IDFT 69 having a smaller number of points than the number of signals N (N = 8). However, when only one of the two symbols to be added by the adder 66 is influenced by the nonlinear operation, the repetitive processing may be executed using the DFT and IDFT having a smaller number of points. When both symbols are influenced by the nonlinear operation, the DFT 24 and IDFT 54 having points (eight points) equal in number to the number of signals N may be selected to execute the repetitive processing.

In each of the sixth, seventh, and eighth embodiments, the number of signal elements of a transmission or received block signal is 8, and calculation for correcting errors due to nonlinear distortions is performed using the 4-point DFT and IDFT. However, the number of signal points is not limited to this.

As described above, according to the present invention, inverse orthogonal transform such as inverse discrete Fourier transform and orthogonal transform such as discrete Fourier transform are used not only to multiplex and separate a multicarrier transmission signal to be transmitted by N carriers but also to estimate and cancel signal distortions generated in the multicarrier transmission signal due to the nonlinear characteristics of the transmitting- or receiving-side apparatus. With this arrangement, the transmitting- or receiving-side apparatus need not use an expensive circuit having a sufficiently wide linear operation range. Hence, a multicarrier transmission apparatus capable of reproducing high-quality information data with an inexpensive arrangement can be provided.

In addition, as redundant data used to estimate the signal distortions, zero symbols arranged at two end portions of each signal block to prevent interference to the near-by band or, of information data to be hierarchically transmitted, priority information data designed to be robust against transmission errors is used. Since a special training signal or other redundant data can be omitted, a multicarrier transmission apparatus capable of holding high transmission quality of information data without lowering the transmission efficiency can be provided.

〈Ninth Embodiment〉

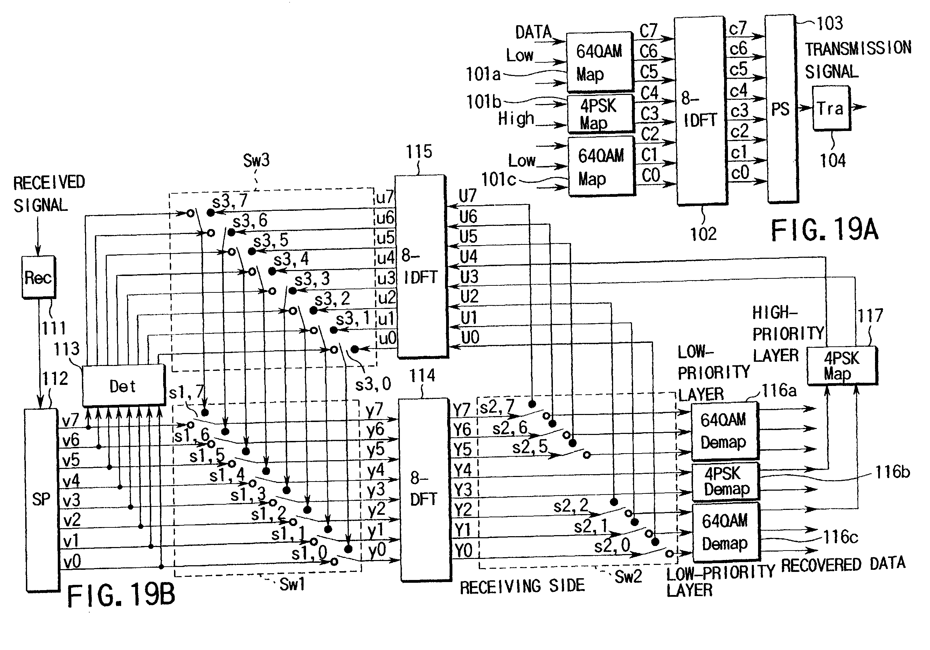

FIGS. 19A and 19B respectively show the arrangements of transmitting and receiving sides of an OFDM (Orthogonal, Frequency Division Multiplex: orthogonal frequency division multiplex) transmitter/ receiver according to the ninth embodiment of the present invention.

On the transmitting side shown in FIG. 19A, an 8-point inverse discrete Fourier transform (IDFT: Inverse Discrete Fourier Transform) 102 converts a signal block $C = [C_0\ C_1\ ...\ C_7]^T$ in the frequency domain, which comprises eight parallel information signals, into the block $C = [C_0\ C_1\ ...\ C_7]^T$ in the time domain. A relation

$$c_m = \frac{1}{8}\sum_{k=0}^{7}\alpha^{-mk}C_k,\ m = 0, 1, ..., 7,$$

holds, and $\alpha = e^{-j2\pi/8}$. In addition, $[]^T$ represents transposition of the block $[]$.

Of the elements of an input block of the IDFT 102, $C_3$ and $C_4$ are assigned to high-priority layers (High layer), and the remaining $C_0$, $C_1$, $C_2$, $C_5$, $C_6$, and $C_7$ are assigned to low-priority layers (Low layer).

The high-priority layer stores the most important information to be always reproduced on the receiving side, and the low-priority layer stores information with low importance, which need not always be reproduced on the receiving side.

For example, in video coding, high-priority information includes synchronization information, control information, movement prediction information, or the low-frequency coefficient of discrete cosine transform (DCT: Discrete Cosine Transform). These pieces of information are essential for decoding because if one of them is omitted, decoding is disabled, resulting in a fatal problem.

On the other hand, the low-priority information includes the high-frequency coefficient of DCT or the like. When such information is omitted in decoding, the reproduction quality is degraded to some degree although decoding is not disabled.

The information data of high-priority layers are assigned to complex signal points called a 4PSK (Phase Shift Keying) constellation by a mapping device 101b.

The low-priority layers are assigned to a 64QAM (Quadrature Amplitude Modulation) constellation by mapping devices 101a and 101c.

The 4PSK has a longer distance between signal points than that of the 64QAM. For this reason, the probability that the data information can be reliably reproduced even when the positions of received signal points are shifted by noise or distortion is high, although the transmission efficiency is low.

The signal block $C = [C_0\ C_1\ ...\ c_7]^T$ in the time domain, which is output from the IDFT 102, is converted into a serial multicarrier symbol in the baseband by a parallel-serial converter (Parallel-Serial converter: PS) 103.

The serial multicarrier symbol in the baseband is sent to a transmission channel through a transmitter (Tra) 104 comprising a digital-analog converter (Digital-Analog converter: DA), an amplifier, a frequency converter, and the like.

On the receiving side shown in FIG. 19B, the received signal is passed through a receiver (Rec) 111 comprising a frequency converter, an amplifier, an analog-digital converter (Analog-Digital converter: AD) and the like, and converted into a parallel signal block $v = [v0\ v1\ ...\ v7]^T$ by a serial-parallel converter (Serial-Parallel converter: SP) 112.

The elements of the parallel signal block $v = [v0\ v1\ ...\ v7]^T$ are degraded due to the nonlinear characteristics of the transmission system.

An input block $y = [y0\ y1\ ...\ y7]^T$ to an 8-point DFT 114 is defined, and an output block $Y = [Y0\ Y1\ ...\ Y7]^T$ is also defined. A relation

$$Y_k = \sum_{m=0}^{7} \alpha^{mk} y_m, \; k = 0,\ 1,\ ...,\ 7$$

holds.

When each of $s_{1,m}$, $m = 0,\ 1,\ ...,\ 7$ is connected to "○" by a switch $Sw_1$ to input the SP output to the 8-point DFT,

$$y_m = v_m, \; m = 0,\ 1,\ ...,\ 7,$$

The output from the 8-point DFT 114 is represented by

$$Y_k = V_k, \; k = 0,\ 1,\ ...,\ 7,$$

For

$$V_k = \sum_{m=0}^{7} \alpha^{mk} v_m, \; k = 0,\ 1,\ ...,\ 7,$$

When each of $s_{2,m}$, $m = 0,\ 1,\ ...,\ 7$ is connected to "○" by a switch $Sw_2$, the outputs $Y_k$, $k = 0,\ 1,\ ...,\ 7$ are input to demapping devices (Demap) 116a to 116c to reproduce data.

The low-priority layer data reproduced by the 64QAM Demaps 116a and 116c are readily influenced by the degradation in the DFT output and contain a number of errors.

The high-priority layer data reproduced by the 4PSK Demap 116b are not so easily influenced by the degradation, so the number of errors can be decreased.

The nonlinear compensation method used in this embodiment will be described next.

As a method of correcting a degraded signal, an iterative method is conventionally known. Details of this method are described in, e.g., S. Kawata, Y. Ichioka, "Iterative image restoration for linearly degraded images, 1, Basis", J. Opt. Soc. Am., vol. 70, no. 7, pp. 762 - 768, July 1980.

This method assumes that when an observer observes a degraded waveform, the original signal before degradation is partially known as prior knowledge in association with the frequency and time domains.

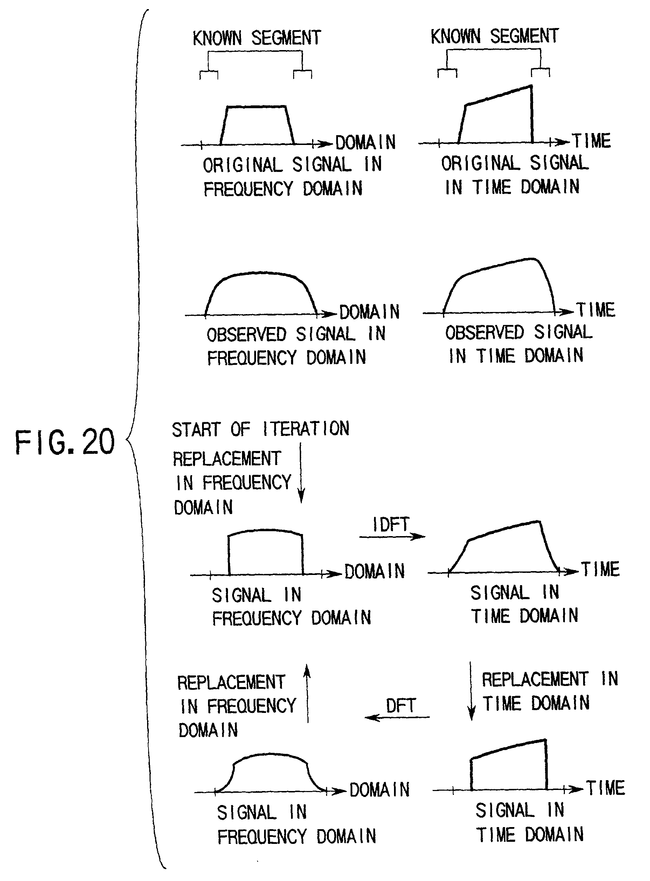

As shown in FIG. 20, a series of operations of partially exchanging a frequency domain signal with a known value, converting the signal into a time domain signal by inverse discrete Fourier transform, further partially exchanging the signal with a known value, and converting the signal into a frequency domain signal by discrete Fourier transform are iterated.

By repeating the iteration, the signal is corrected and converges to the original signal under the no-noise condition. This method corresponds to the iterative solution of simultaneous linear equations. This method is conventionally applied to correct a degraded image signal.

In this embodiment, this iterative method is applied to distortion compensation in the OFDM. This will be described below in detail.

The prior knowledge necessary for correction can be obtained by setting the following assumptions.

Assumption 1

When the nonlinearity is regarded as saturation characteristics, it can be assumed that elements of the block $\underline{v}$, which have large amplitudes, are largely degraded, and elements having small amplitudes are rarely degraded.

When a detector (Det) 113 evaluates the levels of $v_m$, $m = 0, 1, ..., 7$ and detects samples having larger amplitudes than a level which is assumed to be a linear region, largely degraded elements are detected as $v_m$, $m = \mu_1, \mu_2, ..., \mu_\nu$. Assume that $0 < \mu_1 < \mu_2 < ... \mu_\nu < 7$, and $\nu < 2$ from the condition for obtaining a solution. At this time,

$$v_m \simeq c_m, \ m \neq \mu_1, \mu_2, ..., \mu_\nu$$

is assumed. $v_m$, $m = \mu_1, \mu_2, ..., \mu_\nu$ other than the above elements can be modeled as $c_m$ added with noise.

Assumption 2

In the OFDM having a hierarchical structure, high-priority data is designed to have a high error resistance. High-priority data reproduced by the 4PSK Demap 116b often have no errors, so the same 4PSK constellation as that upon transmission without any degradation can be reproduced by remodulating the determination data (Decision-directed recovery). Hence, of the inputs to a transmitting-side IDFT 115, $C_3$ and $C_4$ can be obtained on the receiving side.

The method of iteratively reproducing the remaining $C_k$, $K = 0, 1, 2, 5, 6, 7$ on the receiving side comprises the following two steps.

Step 1

According to assumption 1, when $s_{2, m}$, $m = 0, 1, 2$ and $m = 5, 6, 7$ of the switch $Sw_2$ are connected to "●", the low-priority layer signals output from the 8-point DFT 114 are input to low-priority input points of the 8-point IDFT 115, and simultaneously, high-priority signals reproduced by determination and remodulation are input to the 8-point IDFT 115.

At this time, the elements of an 8-point IDFT input block $U = [U_0 \ U_1 \ ... \ U_7]^T$ are given by

$$U_k = \begin{cases} Y_k, \ k = 0, 1, 2 \\ C_k, \ k = 3, 4 \\ Y_k, \ k = 5, 6, 7 \end{cases}$$

The block U contains six unknown terms.

Step 2

According to assumption 1, $s_{3, m}$, $m = \mu_1, \mu_2, ..., \mu_\nu$ of a switch $Sw_3$ are connected to "●", and $s_{3, m}$, $m \neq \mu_1, \mu_2, ..., \mu_\nu$ are connected to "○". In addition, $s_{1, m}$, $m = 0, 1, ..., 7$ of the switch $Sw_1$ are connected to "●". At this time, the input to the DFT 114 is given by

$$Ym = \begin{cases} u_m, & m = \mu_1, \mu_2 \ldots, \mu_v \\ v_m \sim c_m, & \text{otherwise,} \end{cases}$$

A block $\underline{y}$ contains $v$ ($v < 2$) unknown terms. After iterative processing of steps 1 and 2, $s_{2,m}$, m = 0, 1, 2 and m = 5, 6, 7 of the switch $Sw_2$ are connected to "$\bigcirc$" to input the low-priority outputs from the DFT 114 to the Demaps 116a to 116c.

When $Y_k$ to $C_k$, k = 0, 1, 2 and k = 5, 6, 7, the data reproduced by the Demaps 116a to 116c have few errors.

In this embodiment, the IDFT 115 and DFT 114 are used not only to multiplex/separate carriers but also for nonlinear compensation. The high-priority constellation signals reproduced by determination and remodulation are used as knowledge to be referred to correct the degradations in low-priority signals, so no special pilot signal need be transmitted.

The Det 113 observes $v_m$, m = 0, 1, ..., 7 with distortions. As the number nu of elements increases, a large number of times of iteration for correction is required.

As for the timing of stooping iteration, for example, determination errors in the low-priority outputs from the DFT 114 are measured, and when the number of errors is smaller than a predetermined value, iteration is stopped. Alternatively, the low-priority data is subjected to error detection coding on the transmitting side in advance, and when reproduced data has no errors any more, iteration is stopped.

When high-priority reproduced data has many errors, the effect of iterative correction using the remodulated data as a reference signal cannot be obtained.

Hence, determination errors in the high-priority outputs from the DFT 114 are measured, and correction is not performed when the number of errors is larger than a predetermined value. Alternatively, the high-priority data is subjected to error detection coding on the transmitting side in advance, and when the reproduced data has many errors, correction is not performed.

If nu is larger than the number of high-priority signals as reference signals, the effect of correction by iteration cannot be expected. In this case, iterative correction is not performed.

〈10th Embodiment〉

This embodiment describes a technique for setting the amount of calculation for signal correction smaller than that in the ninth embodiment.

Basic Arrangement

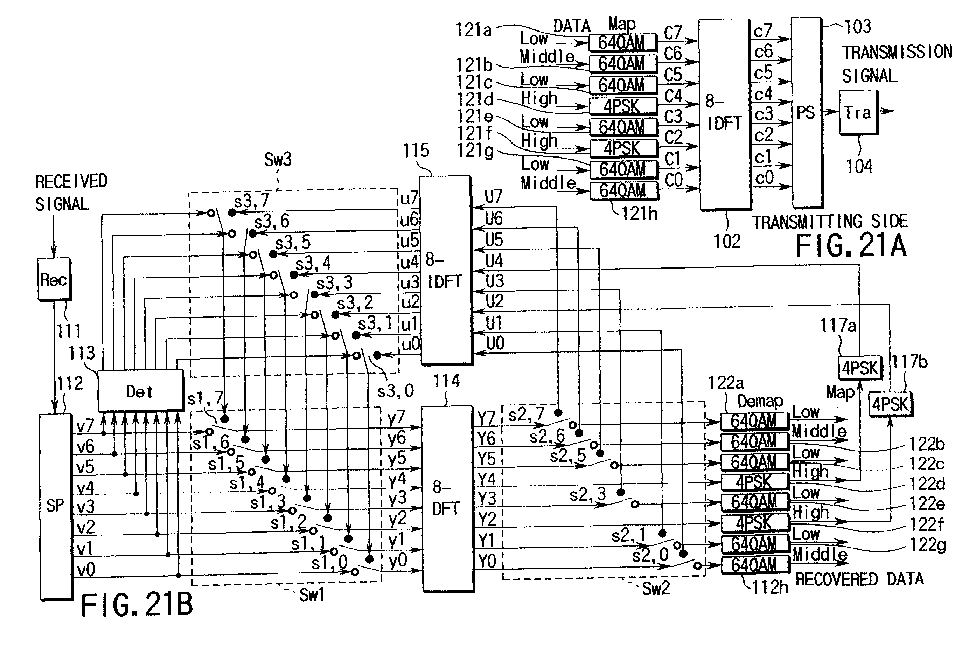

FIGS. 21A and 21B respectively show the arrangements of transmitting and receiving sides of an OFDM (Orthogonal Frequency Division Multiplex: orthogonal frequency division multiplex) transmitter/receiver according to the 10th embodiment of the present invention.

On the transmitting side shown in FIG. 21A, an 8-point inverse discrete Fourier transform (IDFT: Inverse Discrete Fourier Transform) converts a signal block $C = [C_0 \ C_1 \ ... \ C_7]^T$ in the frequency domain, which comprises eight parallel information signals, into a block $c = [c_0 \ c_1 \ ... \ c_7]^T$ in the time domain. A relation

$$c_m = \frac{1}{8}\sum_{k=0}^{7} \alpha^{-mk} C_k, \ m = 0, 1, ..., 7$$

holds, and $\alpha = e^{-j2\pi/8}$. In addition, $[]^T$ represents transposition of the block $[]$.

Of the elements of an input block of the IDFT 102, $C_2$ and $C_4$ are assigned to high-priority layers (High layer), $C_0$ and $C_6$ are assigned to medium-priority layers (Middle layer), and the remaining $C_1$, $C_3$, $C_5$, and $C_7$ are assigned to low-priority layers (Low layer).

The high-priority layer stores the most important information to be always reproduced on the receiving side, and the low-priority layer stores information with low importance, which need not always be reproduced on the receiving side.

The medium-priority layer stores information having importance between the high-priority layer and the low-priority layer. The information data of high-priority layers are assigned to complex signal points called a 4PSK (Phase Shift Keying) constellation by mapping devices 121d and 121f.

The medium- and low-priority layers are assigned to a 64QAM (Quadrature Amplitude Modulation) constellation by mapping devices 121a to 121c, 121e, 121f, and 121g.

The 4PSK has a longer distance between signal points than that of the 64QAM. For this reason, the probability that the data information can be reliably reproduced even when the positions of received signal points are shifted by noise or distortion is high, although the transmission efficiency is low.

A parallel-serial converter (Parallel-Serial converter: PS) 103 generates a serial multicarrier symbol in the baseband. This multicarrier symbol is sent to a transmission channel through a transmitter (Tra) 104 comprising a digital-analog converter (Digital-Analog converter: DA), an amplifier, a frequency converter, and the like.

On the receiving side shown in FIG. 21B, the received signal is passed through a receiver (Rec) 111 comprising a frequency converter, an amplifier, an analog-digital converter (Analog-Digital converter: AD) and the like, and converted into a parallel signal block $v = [v0 \ v1 \ ... \ v7]^T$ by a serial-parallel converter (Serial-Parallel converter: SP) 112. The elements of the parallel signal block are degraded due to the nonlinear characteristics of the transmission system.

An input block $y = [y0 \ y1 \ ... \ y7]^T$ to an 8-point DFT 114 is defined, and an output block $Y = [Y0 \ Y1 \ ... \ Y7]^T$ is also defined. A relation

$$Y_k = \sum_{m=0}^{7} \alpha^{mk} y_m, \ k = 0, 1, ..., 7$$

holds.

When each of $s_{1,m}$, m = 0, 1, ..., 7 is connected to "◯" by a switch $Sw_1$ to input the output from the SP 112 to the 8-point DFT 114,

$$y_m = v_m, \ m = 0, 1, ..., 7,$$

The output from the 8-point DFT 114 is represented by

$$Y_k = V_k, \ k = 0, 1, ..., 7,$$

For

$$V_k = \sum_{m=0}^{7} \alpha^{mk} v_m, \ k = 0, 1, ..., 7$$

When each of $s_{2,m}$, m = 0, 1, ..., 7 is connected to "◯" by a switch $Sw_2$, the outputs $Y_k$, k = 0, 1, ..., 7 are input to demapping devices (Demap) 122a to 122h to reproduce data.

The medium- and low-priority layer data reproduced by the 64QAM Demaps 122a to 122c, 122e, 122g, and 122h are readily influenced by the degradation in the outputs from the DFT 114 and contain a number of errors.

The high-priority layer data reproduced by the 4PSK Demaps 122d and 122f are not so easily influenced by the degradation, so the number of errors can be decreased.

The nonlinear compensation method used in this embodiment will be described next. The prior knowledge necessary for correction can be obtained by setting the following assumptions.

Assumption 1

When the nonlinearity is regarded as saturation characteristics, it can be assumed that elements of the block $v$, which have large amplitudes, are largely degraded, and elements having small amplitudes are rarely degraded. When a detector (Det) 113 evaluates the levels of $v_m$, m = 0, 1, ..., 7 and detects samples having larger amplitudes than a level which is assumed to be a linear region, largely degraded elements are detected as $V_m$, m = $\mu_1, \mu_2, ..., \mu_v$.

Assume that $0 < \mu_1 < \mu_2 < ... \mu_v < 7$, and $v < 2$. At this time,

$$v_m \simeq cm, \ m \neq \mu_1, \mu_2, ..., \mu_v$$

is assumed. $v_m$, m = $\mu_1, \mu_2, ..., \mu_v$ other than the above elements can be modeled as $c_m$ added with noise.

Assumption 2

In the OFDM having a hierarchical structure, high-priority data is designed to have a high error resistance. High-priority data reproduced by the 4PSK Demaps 122d and 122f often have no errors, so the same 4PSK constellation as that upon transmission without any degradation can be reproduced by remodulating the determination data (Decision-directed recovery).

Hence, of the inputs to the transmitting-side 8-point IDFT, $C_2$ and $C_4$ can be obtained on the receiving side.

The method of iteratively reproducing the remaining $C_k$, $K = 0, 1, 3, 5, 6, 7$ on the receiving side comprises the following two steps.

Step 1

According to assumption 1, when $s_{2,m}$, $m = 0, 1, 3, 5, 6, 7$ of the switch $Sw_2$ are connected to "●", the low-priority layer signals output from the 8-point DFT 114 are input to medium- and low-priority input points of the 8-point IDFT 115, and simultaneously, high-priority signals reproduced by determination and remodulation are input to the 8-point IDFT 115.

At this time, the elements of an 8-point IDFT input block $U = [U_0\ U_1\ ...\ U_7]^T$ are given by

$$U_k = \begin{cases} Y_k, & k = 0,\ 1,\ 3,\ 5,\ 6,\ 7 \\ C_k, & k = 2,\ 4 \end{cases}$$

The block U contains six unknown terms.

Step 2

According to assumption 1, $s_{3,m}$, $m = \mu_1, \mu_2, ..., \mu_v$ of a switch $Sw_3$ are connected to "●", and $s_{3,m}$, $m \neq \mu_1$, $\mu_2, ..., \mu_v$ are connected to "○".

In addition, $s_{1,m}$, $m = 0, 1, ..., 7$ of the switch $Sw_1$ are connected to "●". At this time, the input to the DFT 114 is given by

$$Y_m = \begin{cases} u_m, & m = \mu_1,\ \mu_2\ ...,\ \mu_v \\ v_m \simeq c_m, & \text{otherwise}, \end{cases}$$

A block $\underline{y}$ contains $v$ ($v < 2$) unknown terms.

After iterative processing of steps 1 and 2, $s_{2,m}$, $m = 0, 1, 3, 5, 6, 7$ of the switch $Sw_2$ are connected to "○" to input the low-priority outputs from the DFT 114 to the Demaps 122a to 122c, 122r, 122g, and 122h.

When $Y_k$ to $C_k$, $k = 0, 1, 3, 5, 6, 7$, the data reproduced by the Demaps have few errors.

In this embodiment, the IDFT 115 and DFT 114 are used not only to multiplex/separate carriers but also for nonlinear compensation. The high-priority constellation signals reproduced by determination and remodulation are used as knowledge to be referred to correct the degradations in medium- and low-priority signals, so no special pilot signal need be transmitted.

Method of Decreasing Calculation Amount

Subsequently, the number of points of the DFT and IDFT in iterative correction is decreased.

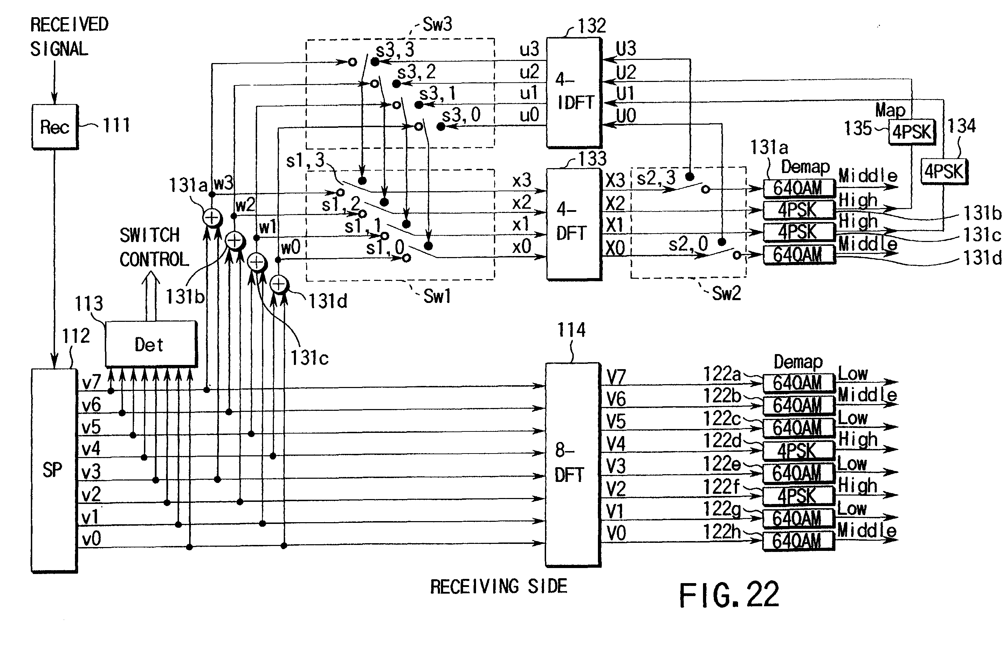

FIG. 22 shows the arrangement of the receiving side of an OFDM (Orthogonal Frequency Division Multiplex: orthogonal frequency division multiplex) transmitter/receiver according to the 10th embodiment of the present invention, which decreases the calculation amount.

The received signal is passed through the receiver (Rec) 111 comprising a frequency converter, an amplifier, an analog-digital converter (Analog-Digital converter: AD) and the like, and converted into a parallel signal block $v = (v0\ v1\ ...\ v7]^T$ by the serial-parallel converter (Serial-Parallel converter: SP) 112.

The elements of the parallel signal block $v = [v0\ v1\ ...\ v7]^T$ are degraded due to the nonlinear characteristics of the transmission system.

When these elements are directly input to the 8-point DFT 114, the output block becomes $V = [V0\ V1\ ...\ V7]^T$ which is influenced by the degradation in transmission channel.

When the high-priority signals are input to the 4PSK Demaps 122d and 122f, and the medium- and low-priority signals are input to the 64QAM Demaps 122a to 122c, 122e, 122g, and 122h, data are obtained. The high-priority data have no errors at high probability, and the medium- and low-priority data contain errors at high probability.

A method of improving the quality of medium-priority data with higher priority than that of low-priority data will be described below.

As shown in FIG. 22, a 4-point DFT 133 is prepared. The input block is defined as $x = [x0\ x1\ x2\ x3]^T$, and the output block is defined as $X = [X0\ X1\ X2\ x3]^T$. A relation

$$X_k = \sum_{m=0}^{3} \beta^{mk} x_m, \quad k = 0, 1, 2, 3,$$

holds between the input and output blocks. In this case, $\beta = e^{-j2\pi/4}$.

$$w_m = v_m + v_{4+m}, \quad m = 0, 1, 2, 3,$$

is defined. Each of $s_{1,m}$, $m = 0, 1, 2, 3$ is connected to "◯" by the switch $Sw_3$ to input $w_0$, $w_1$, $w_2$, and $w_3$ to the 4-point DFT. More specifically,

$$x_m = w_m,, m = 0, 1, 2, 3$$

At this time, since $\beta = e^{-j2\pi/4} = \alpha^2$, the output from the 4-point DFT 133 is given by

$$X_k = \sum_{m=0}^{3} w_m \beta^{mk},$$
$$= \sum_{m=0}^{3} (v_m + v_4 + m) \beta^{mk},$$
$$= \sum_{m=0}^{8} v_m \alpha^{2mk}, \quad k = 0, 1, 2, 3,$$

From this, the outputs $X_k$, $k = 0, 1, 2, 3$ from the 4-point DFT 133, which correspond to $w_m$, $m = 0, 1, 2, 3$ and the output $V_k$, $k = 0, 1, ..., 7$ from the 8-point DFT 114, which correspond to $v_m$, $m = 1, 2, ..., 7$ have the following relation

$$X_k = V_{2k}, \quad k = 0, 1, 2, 3,$$

This means that, of the eight elements $v_0$, $v_1$, ..., $v_7$, $v_0$, $v_2$, $v_4$, and $v_6$ are calculated by calculation by the 4-point DFT 133.

When each of $s_{2,m}$, $m = 0, 3$ is connected to "◯" by the switch $Sw_2$, $X_k$, $k = 0, 1, 2, 3$ are input to demapping devices (Demap) 131a to 131d to reproduce data.

The medium-priority layer data assigned to X0 = V0 and X3 = V6 and reproduced by the 64QAM Demaps 131a and 131d are readily influenced by the degradation in outputs from the 4-point DFT 133 and contain many errors.

On the other hand, the high-priority layer data assigned to X1 = V2 and X2 = V4 and reproduced by the 4PSK Demaps 131b and 131c are not easily influenced by the degradation, so the number of errors can be minimized.

Compensation Method

A nonlinear compensation method proposed in this embodiment will be described. Prior knowledge necessary for correction can be obtained by setting the following assumptions.

Assumption 1

When the nonlinearity is regarded as saturation characteristics, it can be assumed that elements of the block

$\underline{v}$, which have large amplitudes, are largely degraded, and elements having small amplitudes are rarely degraded.

When the detector (Det) 113 evaluates the levels of $v_m$, m = 0, 1, ..., 7 and detects a case wherein at least one of $v_m$ and $v_{m+4}$ has a larger amplitude than a level which is assumed to be a linear region, largely degraded elements of $w_m$ m = 0, 1, 2, 3 are detected as $w_m$, m = $\mu_1$, $\mu_2$, ..., $\mu_v$. Assume that $0 < \mu_1 < \mu_2 < ... \mu_v < 3$, and $v < 2$. At this time,

$$w_m \simeq c_m + c_{4+m}, \quad m \neq \mu_1, \mu_2, ..., \mu_v$$

is assumed. $w_m$, m = $\mu_1$, $\mu_2$, ..., $\mu_v$ other than the above elements can be modeled as $c_m$ added with noise.

Assumption 2

In the OFDM having a hierarchical structure, high-priority data is designed to have a high error resistance. High-priority data reproduced by the 4PSK Demap often have no errors, so the same 4PSK constellation as that upon transmission without any degradation can be reproduced by remodulating the determination data (Decision-directed recovery). Hence, of the inputs to the transmitting-side IDFT, $C_2$ and $C_4$ can be obtained on the receiving side.

The method of iteratively reproducing the remaining $C_0$ and $C_6$ on the receiving side comprises the following two steps.

Step 1

According to assumption 1, when $s_{2,m}$, m = 0, 3 of the switch $Sw_2$ are connected to "●", the low-priority layer signals output from the 4-point DFT 133 are input to medium- and low-priority input points of a 4-point IDFT 132, and simultaneously, high-priority signals reproduced by determination and remodulation are input to the 4-point IDFT 132. At this time, the elements of an input block U = $[U_0 \, U_1 \, ... \, U_7]^T$ to the 4-point IDFT 132 are given by

$$U_k = \begin{cases} X_k, & k = 0, 3 \\ C_k, & k = 2, 4 \end{cases}$$

The block U contains two unknown terms.

Step 2

According to assumption 1, $s_{3,m}$, m = $\mu_1$, $\mu_2$, ..., $\mu_v$ of the switch $Sw_3$ are connected to "●", and $s_{3,m}$, m ≠ $\mu_1$, $\mu_2$, ..., $\mu_v$ are connected to "○". In addition, $s_{1,m}$, m = 0, 1, ..., 3 of the switch $Sw_1$ are connected to "●". At this time, the input to the 4-point DFT 133 is given by

$$x_m = \begin{cases} u_m, & m = \mu_1, \mu_2 ..., \mu_v \\ w_m \simeq c_m + c_{4+m}, & \text{otherwise}, \end{cases}$$

A block $\underline{x}$ contains $v$ ($v < 2$) unknown terms. After iterative processing of steps 1 and 2, $s_{2,m}$, m = 0, 3 of the switch $Sw_2$ are connected to "○" to input the medium- and low-priority outputs from the 4-point DFT 133 to the Demaps 131a to 131d.

When $X_k$ to $C_{2k}$, k = 0, 3, the data reproduced by the Demaps have few errors.

In this embodiment, iterative calculation is performed using the 4-point IDFT 132 and 4-point DFT 133 to improve the quality of the medium-priority layer using the high-priority constellation signals reproduced by determination and remodulation as reference signals.

The calculation amount is decreased as compared to a case wherein iterative calculation is performed by the 8-point IDFT and 8-point DFT to improve the qualities of both of the medium- and low-priority layers.

In the OFDM, a degradation in reproduced data due to a transmission distortion poses a problem.

According to the ninth embodiment of the present invention, of transmission data of two layers, i.e., high and low layers, high-priority transmission data is modulated by a scheme robust against transmission errors. Iterative processing is performed by the DFT and IDFT using a signal obtained by remodulating received reproduced data of high-priority data, which has few errors, as a reference signal, thereby improving the quality of low-priority reproduced data.

On the other hand, according to the 10th embodiment of the present invention, of transmission data of three layers, i.e., high-, medium-, and low layers, high-priority transmission data is modulated by a scheme robust against transmission errors. Iterative processing is performed by the DFT and IDFT using a signal obtained by remodulating received reproduced data of high-priority data, which has few errors, as a reference signal, thereby improving the quality of medium- and low-priority reproduced data. Improvement of only the quality of the medium-priority reproduced data is realized by iterative processing by a DFT and IDFT having a smaller number of points and smaller calculation amount.

According to the above-described embodiments, distortion compensation can be realized without transmitting any special pilot signal.

Industrial Applicability

As has been described above, a multicarrier transmission apparatus of the present invention is suitable to perform digital audio broadcasting, digital TV broadcasting, or radio LAN information transmission.

## Claims

1. A multicarrier transmission apparatus characterized by comprising:

   generation means for adding transmission redundant signals known between transmitting and receiving sides to transmission information signals of a plurality of systems to generate a transmission block signal, and converting the transmission block signal on a frequency axis into a multicarrier signal on a time axis;
   transmission means for transmitting the multicarrier signal generated by said generation means;
   reception means for receiving the multicarrier signal transmitted from said transmission means;
   reproduction means for reproducing a received block signal corresponding to the transmission block signal from the multicarrier signal received by said reception means;
   orthogonal transform means for converting the received block signal on a time axis, reproduced by said reproduction means, into a received block signal on a frequency axis;
   additive noise canceling means for obtaining difference values between received redundant signals contained in the received block signal on the frequency axis, which is converted by said orthogonal transform means and the known transmission redundant signals, and estimating and canceling additive noise components generated in the received block signal on the frequency axis by signal distortions on the basis of the difference values.

2. A multicarrier transmission apparatus according to claim 1, characterized in that the transmission redundant signal known is one of a zero symbol arranged at each of two end portions of the transmission block signal to avoid interference to a near-by band and a control pilot symbol.

3. A multicarrier transmission apparatus according to claim 1, characterized in that said additive noise canceling means comprises

   detection means for detecting positions and number of signal distortions generated in the received multicarrier signal in a transmission zone between said transmission means and said reception means, and
   canceling means for, on the basis of the positions and number of signal distortions detected by said detection means and the difference values between the received redundant signals contained in the received block signal on the frequency axis, which is converted by said orthogonal transform means, and the known transmission redundant signals, estimating and canceling the additive noise components generated in the received block signal on the frequency axis by the signal distortions.

4. A multicarrier transmission apparatus according to claim 3, characterized in that said canceling means estimates and cancels the additive noise components when the number of signal distortions detected by said detection means is less than the number which can be estimated from the known transmission redundant signals, and does not estimate and cancel the additive noise components when the number of signal distortions is more than the number which can be estimated from the known transmission redundant signals.

5. A multicarrier transmission apparatus characterized by comprising:

generation means for adding transmission redundant signals known between transmitting and receiving sides to transmission information signals of a plurality of systems to generate a transmission block signal, and converting the transmission block signal on a frequency axis into a multicarrier signal on a time axis;

transmission means for transmitting the multicarrier signal generated by said generation means;

reception means for receiving the multicarrier signal transmitted from said transmission means;

reproduction means for reproducing a received block signal corresponding to the transmission block signal from the multicarrier signal received by said reception means;

orthogonal transform means for converting the received block signal on a time axis, reproduced by said reproduction means, into a received block signal on a frequency axis;

signal distortion estimation means for obtaining difference values between received redundant signals contained in the received block signal on the frequency axis, which is obtained by said orthogonal transform means, and the known transmission redundant signals, and estimating a nature of signal distortions generated in the received multicarrier signal on the basis of the difference values; and

compensation means, arranged between said reception means and said reproduction means, for compensating for the signal distortions in the received multicarrier signal on the basis of characteristics of the signal distortions estimated by said signal distortion estimation means.

6. A multicarrier transmission apparatus according to claim 5, characterized in that said signal distortion estimation means estimates the signal distortions using, as redundant signals for signal distortion estimation, zero symbols arranged at two end portions of the transmission block signal to avoid interference to a near-by band.

7. A multicarrier transmission apparatus according to claim 5, characterized in that said signal distortion estimation means comprises

detection means for detecting positions and number of signal distortions generated in the received multicarrier signal in a transmission zone between said transmission means and said reception means, and

estimation means for, on the basis of the positions and number of signal distortions detected by said detection means and the difference value between the received redundant signals contained in the received block signal on the frequency axis, which is converted by said orthogonal transform means, and the known transmission redundant signals, estimating the nature of the signal distortions generated in the received multicarrier signal.

8. A multicarrier transmission apparatus according to claim 7, characterized in that said estimation means performs calculation for estimating the signal distortions when the number of signal distortions generated in the multicarrier signal, which are detected by said detection means, is less than the number which can be estimated from the known transmission redundant signals, and does not perform calculation for estimating the signal distortions when the number of signal distortions exceeds the number which can be estimated from the known transmission redundant signals.

9. A multicarrier transmission apparatus according to claim 7, characterized in that said detection means compares a signal level of the received multicarrier signal with a threshold value which is set in advance in accordance with a dynamic range of at least one of said transmission means and said reception means to detect the positions and number of signal distortions.

10. A multicarrier transmission apparatus according to claim 5, characterized in that said compensation means comprises level changing means for changing a level of the received multicarrier signal, wherein input-to-output characteristics of said level changing means is set on the basis of the characteristics of the signal distortions, which are estimated by said signal distortion estimation means.

11. A multicarrier transmission apparatus characterized by comprising:

generation means for synthesizing first transmission information signals of a plurality of systems with second transmission information signals of plurality of systems, the second transmission information signals having higher priority than that of the first transmission information signals, to generate a transmission block signal, and converting the transmission block signal on a frequency axis into a transmission block signal on a time axis to generate a transmission multicarrier signal;

a transmission circuit for transmitting the transmission multicarrier signal generated by said generation means to a transmission channel;

a reception circuit for receiving the transmission multicarrier signal arriving from said transmission circuit through the transmission channel;

received block signal reproduction means for reproducing a received block signal corresponding to the transmission block signal from a received multicarrier signal received by said reception circuit;

orthogonal transform means for converting the received block signal on time axis reproduced by said received block signal reproduction means into a received block signal on a frequency axis;

correction means for correcting second received information signals in the received block signal on the frequency axis converted by said orthogonal transform means, the second information signal corresponding to the second transmission information signals, to obtain the second transmission information signals; and

additive noise canceling means for, on the basis of the second received information signals before correction by said correction means and the second received information signals after correction, estimating and canceling additive noise components generated in the received block signal on the frequency axis by signal distortions.

12. A multicarrier transmission apparatus according to claim 11, characterized in that said additive noise canceling means estimates and cancels the additive noise components generated in the received block signal on the frequency axis, on the basis of spectrum components of the second received information signals corrected by said correction means and the second received information signals before correction.

13. A multicarrier transmission apparatus according to claim 11, characterized in that said additive noise canceling means comprises

detection means for comparing a signal level of the received multicarrier signal with a threshold value which is set in advance in accordance with a dynamic range of at least one of said transmission circuit and said reception circuit to detect positions and number of signal distortions, and

means for estimating and canceling the additive noise components on the basis of the positions and number of signal distortions detected by said detection means, the second received information signals corrected by said correction means, and the second received information signals before correction.

14. A multicarrier transmission apparatus characterized by comprising:

generation means for synthesizing first transmission information signals of a plurality of systems with second transmission information signals of a plurality of systems, the second transmission information signals having higher priority than that of the first transmission information signals, to generate a transmission block signal, and converting the transmission block signal on a frequency axis into a transmission block signal on a time axis to generate a transmission multicarrier signal;

a transmission circuit for transmitting the generated transmission multicarrier signal to a transmission channel;

a reception circuit for receiving the transmission multicarrier signal arriving from said transmission circuit through the transmission channel;

received block signal reproduction means for reproducing a received block signal corresponding to the transmission block signal from the received multicarrier signal received by said reception circuit;

orthogonal transform means for converting the received block signal on a time axis reproduced by said received block signal reproduction means into a received block signal on a frequency axis;

correction means for correcting second received information signals in the received block signal on the frequency axis converted by said orthogonal transform means, the second received information signals corresponding to the second transmission information signals, to obtain the second transmission information signals;

signal distortion estimation means for estimating nature of signal distortions generated in the received multicarrier signal, on the basis of the second received information signals before correction by said correction means and the second received information signals after correction; and

compensation means, arranged between said reception circuit and said received block signal reproduction means, for compensating for the signal distortions in the received multicarrier signal on the basis of the nature of the signal distortions estimated by said signal distortion estimation means.

15. A multicarrier transmission apparatus according to claim 14, characterized in that said signal distortion estimation means estimates the nature of the signal distortions generated in the received multicarrier signal, on the basis of spectrum components of the second received information signals corrected by said correction means and the second received information signals before correction.

**16.** A multicarrier transmission apparatus according to claim 14, characterized in that said signal distortion estimation means comprises

detection means for comparing a signal level of the received multicarrier signal with a threshold value which is set in advance in accordance with a dynamic range of at least one of said transmission circuit and said reception circuit to detect positions and number of signal distortions, and

means for estimating characteristics of the signal distortions on the basis of the positions and number of signal distortions detected by said detection means, the second received information signals corrected by said correction means, and the second received information signals before correction.

**17.** A multicarrier transmission apparatus according to claim 14, characterized in that said compensation means comprises level changing means for changing a level of the received multicarrier signal, wherein input-to-output characteristics of said level changing means is set on the basis of characteristics of the signal distortions, which are estimated by said signal distortion estimation means.

**18.** A multicarrier transmission apparatus characterized by comprising:

generation means for adding transmission redundant signals known between transmitting and receiving sides to transmission information signals of a plurality of systems to generate a transmission block signal, and converting the transmission block signal on a frequency axis into a transmission block signal on a time axis to generate a transmission multicarrier signal;

a transmission circuit for transmitting the transmission multicarrier signal generated by said generation means to a transmission channel;

a reception circuit for receiving the transmission multicarrier signal arriving from said transmission circuit through the transmission channel;

received block signal reproduction means for reproducing a received block signal corresponding to the transmission block signal from a received multicarrier signal obtained by said reception circuit;

detection means for estimating, from a plurality of signal elements contained in the received block signal reproduced by said received block generation means, positions and number of signal elements added with distortions larger than a predetermined amount;

orthogonal transform means for converting the input received block signal on a time axis into a received block signal on a frequency axis;

demodulation means for demodulating information signals contained in the received block signal on the frequency axis, which is output from said orthogonal transform means, to reproduce information data;

replacement means for replacing received redundant signals contained in the received block signal on the frequency axis, which is output from said orthogonal transform means, with control signals generated on the basis of the known transmission redundant signals;

inverse orthogonal transform means for converting the received block signal on the frequency axis after signal replacement by said replacement means back into the received block signal on the time axis;

correction means for replacing, of the signal elements of the received block signal generated by said received block signal generation means, the signal elements which are estimated by said detection means to be added with the distortions larger than the predetermined amount with corresponding signal elements of the received block signal output from said inverse orthogonal transform means; and

control means,

said control means comprising

first means for inputting the received block signal output from said received block signal reproduction means to said orthogonal transform means, inputting the received block signal output from said orthogonal transform means to said inverse orthogonal transform means through said replacement means, and causing said correction means to generate a corrected received block signal on the basis of the output from said inverse orthogonal transform means,

second means for executing, at least once, an operation of inputting the corrected received block signal obtained by said correction means to said orthogonal transform means, inputting the received block signal output from said orthogonal transform means to said inverse orthogonal transform means through said replacement means, and causing said correction means to generate a corrected received block signal on the basis of the output from said inverse orthogonal transform means by said first means, and

third means for, after the operation by said second means is ended, causing said demodulation means to demodulate the information data on the basis of the received block signal output from said orthogonal transform means.

**19.** A multicarrier transmission apparatus according to claim 18, characterized in that said control means further comprises determination means for determining whether the number of signal elements which are estimated by said detection means to be added with the distortions larger than the predetermined amount is not more than a predetermined number, and executes said first, second, and third means when said determination means determines that the number of signal elements is not more than the predetermined number.

**20.** A multicarrier transmission apparatus characterized by comprising:

generation means for adding transmission redundant signals known between transmitting and receiving sides to transmission information signals of a plurality of systems to generate a transmission block signal, and converting the transmission block signal on a frequency axis into a transmission block signal on a time axis to generate a transmission multicarrier signal;

a transmission circuit for transmitting the transmission multicarrier signal generated by said generation means to a transmission channel;

a reception circuit for receiving the transmission multicarrier signal arriving from said transmission circuit through the transmission channel;

first received block signal reproduction means for reproducing a first received block signal corresponding to the transmission block signal from a received multicarrier signal obtained by said reception circuit;

second received block signal generation means for generating a second received block signal having a smaller number of signal points than that of the first received block signal on the basis of the first received block signal reproduced by said first received block signal generation means;

detection means for estimating, from a plurality of signal elements contained in the first received block signal reproduced by said first received block generation means, positions and number of signal elements added with distortions larger than a predetermined amount;

first orthogonal transform means, having input signal points corresponding in number to the signal elements of the first received block signal reproduced by said first received block signal generation means, for converting the input signal on a time axis into an input signal on a frequency axis;

demodulation means for demodulating information signals contained in the received block signal on the frequency axis, which is output from said first orthogonal transform means, to reproduce information data;

second orthogonal transform means, having a smaller number of input signal points than that of said first orthogonal transform means, for converting the input second received block signal on a time axis into a second received block signal on a frequency axis;

replacement means for replacing received redundant signals contained in the second received block signal on the frequency axis, which is output from said second orthogonal transform means, with control signals generated on the basis of the known transmission redundant signals;

inverse orthogonal transform means, having input signal points corresponding in number to said second orthogonal transform means, for converting the second received block signal after signal replacement by said replacement means back into a second received signal on a time axis;

correction means for replacing, of the signal elements of the second received block signal generated by said second received block signal generation means, the signal elements which are estimated by said detection means to be added with the distortions larger than the predetermined amount with corresponding signal elements of the second received block signal output from said inverse orthogonal transform means; and

control means,

said control means comprising

first means for inputting the second received block signal output from said second received block signal reproduction means to said second orthogonal transform means, inputting the second received block signal on the frequency axis, which is output from said second orthogonal transform means, to said inverse orthogonal transform means through said replacement means, and causing said correction means to generate a corrected second received block signal on the basis of the output from said inverse orthogonal transform means,

second means for executing, at least once, an operation of inputting the corrected received block signal obtained by said correction means to said second orthogonal transform means, inputting the received block signal output from said second orthogonal transform means to said inverse orthogonal transform means through said replacement means, and causing said correction means to generate a corrected second received block signal on the basis of the output from said inverse orthogonal transform means by said first means, and

third means for, after the operation by said second means is ended, replacing, of the signal elements of the first received block signal generated by said first received block signal generation means, the signal elements which are estimated by said detection means to be added with the distortions larger than the predetermined amount with corresponding signal elements of the second received block signal output from said inverse orthogonal transform means, inputting the signal elements to said first orthogonal transform means, and causing said demodulation means to demodulate the information data on the basis of the first received block signal on the frequency axis, which is output from said first orthogonal transform means.

21. A multicarrier transmission apparatus according to claim 20, characterized in that when said transmission circuit inserts a priority information signal into a predetermined system of the transmission information signals of the plurality of systems and transmits the transmission information signals, said second received block signal generation means selects a predetermined signal corresponding to the priority information signal from the first received block signal generated by said first received block signal generation means and outputs the predetermined signal as the second received block signal.

22. A multicarrier transmission apparatus characterized by comprising:

first conversion means for converting a transmission signal block on a frequency axis, which has a plurality of signals, into a transmission signal block on a time axis;
transmission means for transmitting the transmission signal block converted by said first conversion means;
reception means for receiving the transmission signal block transmitted by said transmission means as a received signal block on the time axis; and
second conversion means for converting the received signal block received by said reception means into a received signal block on the frequency axis,
wherein the plurality of signals contained in the received signal block on the time axis and the received signal block on the frequency axis have known signals whose transmitted values are known and unknown signals other than the known signals, and
said apparatus comprises correction means for correcting at least one of the unknown signals contained in the received signal block on the time axis and the unknown signals contained in the received signal block on the frequency axis to at least one of unknown signals contained in the transmission signal block on the time axis and unknown signals contained in the transmission signal block on the frequency axis on the basis of the known signals contained in the received signal block on the frequency axis, which is converted by said second conversion means.

23. A multicarrier transmission apparatus according to claim 22, characterized in that

said first conversion means converts the transmission signal block on the frequency axis into the transmission signal block on the time axis by inverse discrete Fourier transform, and
said second conversion means converts the received signal block on the time axis into the received signal block on the frequency axis by discrete Fourier transform.

24. A multicarrier transmission apparatus according to claim 22, characterized by further comprising

first replacement means for at least one of the known signals contained in the received signal block on the frequency axis, which is converted by said second conversion means, with the transmitted value,
third conversion means for converting the received signal block on the frequency axis, which contains the known signal replaced by said first replacement means, into the received signal block on the time axis,
determination means for determining whether the plurality of signals contained in the received signal block received by said reception means exceed a predetermined amplitude level, and
second replacement means for replacing a signal which is determined to exceed the predetermined amplitude level by said determination means with a signal contained in the received signal block on the time axis, which is converted by said third conversion means, and corresponding to the signal which is determined to exceed the predetermined amplitude level.

25. A multicarrier transmission apparatus according to claim 22, characterized in that the known signal has a signal having a predetermined amplitude value.

26. A multicarrier transmission apparatus according to claim 22, characterized in that the known signal represents information to be transmitted, and

correction by said correction means is performed using a known signal reproduced by mapping the known signals contained in the received signal block on the frequency axis, which is converted by said second conversion means, and demapping the mapped known signals.

27. A multicarrier transmission apparatus according to claim 22, characterized in that correction by said correction means is performed on the basis of the known signals contained in the received signal block on the frequency axis and, of the plurality of signals contained in the received signal block on the time axis, signals on the time axis which have not more than a predetermined amplitude level.

28. A multicarrier transmission apparatus according to claim 22, characterized in that said correction means estimates known signals on the time axis on the basis of the known signals contained in the received block on the frequency axis and the unknown signals contained in the received block on the frequency axis, and performs correction on the basis of the estimated known signals on the time axis and the known signals contained in the received block on the frequency axis.

29. A multicarrier transmission apparatus according to claim 22, characterized in that correction of the unknown signals contained in the received block on the time axis by said correction means is performed by a compensator inserted between said reception means and said second conversion means.

30. A multicarrier transmission apparatus according to claim 22, characterized in that said correction means determines whether correction can be performed, on the basis of one of a relationship between the known signals on the time axis and the number of known signals on the frequency axis and a relationship between the known signals on the frequency axis and the number of known signals on the frequency axis, and when it is determined that correction can be performed, performs correction processing.

EP 0 942 547 A1

## FIG. 1A

INFORMATION → MAP (1) → [X0, X1, X2, X3, X4, X5, X6, X7] (X) → IDFT (2) → [x0, x1, x2, x3, x4, x5, x6, x7] (x) → P/S (3) → $X_T$ → D/A (4) → TX (5) →

TRANSMITTING SIDE

## FIG. 1B

→ RX (6) → A/D (7) → $V_T$ → S/P (8) → [v0, v1, v2, v3, v4, v5, v6, v7] (v) → DFT (9) → [V0, V1, V2, V3, V4, V5, V6, V7] (V) → DMAP (10) → INFORMATION

RECEIVING SIDE

FIG. 2A

FIG. 2B

FIG. 3

POWER

SIDELOBE

SIDELOBE

FREQUENCY

REQUESTED BANDWIDTH

FIG. 4

POWER

SIDELOBE

SIDELOBE

FREQUENCY

REQUESTED BANDWIDTH

+1V

−1V

INPUT SIGNAL

+1V

−1V

CLIPPED SIGNAL

FIG. 5

FIG. 6

+1.5V

+1V

INPUT SIGNAL

+1V

ADDITIVE NOISE

−0.5V

+1V

MODEL OF CLIPPED SIGNAL

EP 0 942 547 A1

FIG. 7A

X

REDUNDANT
(NULL SIGNAL)    X0

X1

X2

INFORMATION    X3

X4

X5

X6

REDUNDANT    X7
(NULL SIGNAL)

11
IDFT

x
x0
x1
x2
x3
x4
x5
x6
x7

12
P/S

$X_T$

13
D/A

14
TX

TRANSMISSION
MULTICARRIER
SIGNAL

TRANSMITTING SIDE

FIG. 7B

RECEIVED
MULTICARRIER
SIGNAL

21
RX

22
A/D

29
CMP

$V_T$

23
S/P

v
v0
v1
v2
v3
v4
v5
v6
v7

24
DFT

V
V0
V1
V2
V3
V4
V5
V6
V7

26

20

27

EST

X
X0    REDUNDANT
X1    (NULL SIGNAL)
X2
X3    INFORMATION
X4
X5
X6
X7    REDUNDANT
(NULL SIGNAL)

28    DET

RECEIVING SIDE

44

EXAMPLE OF INPUT/OUTPUT OF
NONLINEAR CHARACTERISTICS

FIG. 8

EXAMPLE OF INPUT/OUTPUT
OF COMPENSATOR

FIG. 9

FIG. 10A

INPUT SIGNAL EXAMPLE OF
NONLINEAR CHARACTERISTICS

FIG. 10B

OUTPUT SIGNAL EXAMPLE OF
NONLINEAR CHARACTERISTICS

FIG. 10C

ADDITIVE NOISE MODEL OF
NONLINEAR CHARACTERISTICS

FIG. 11A

FIG. 11B

EP 0 942 547 A1

FIG. 12A

FIG. 12B

EP 0 942 547 A1

**FIG. 13**

(TRANSMITTING SIDE)

**FIG. 17**

(TRANSMITTING SIDE)

FIG. 14

(RECEIVING SIDE)

EP 0 942 547 A1

FIG. 15

(RECEIVING SIDE)

EP 0 942 547 A1

FIG.16

FIG.18

FIG. 19A

FIG. 19B

FIG. 20

KNOWN SEGMENT

KNOWN SEGMENT

ORIGINAL SIGNAL IN
FREQUENCY DOMAIN

ORIGINAL SIGNAL
IN TIME DOMAIN

OBSERVED SIGNAL IN
FREQUENCY DOMAIN

OBSERVED SIGNAL
IN TIME DOMAIN

START OF ITERATION

REPLACEMENT
IN FREQUENCY
DOMAIN

IDFT

SIGNAL IN
FREQUENCY DOMAIN

SIGNAL IN
TIME DOMAIN

REPLACEMENT
IN FREQUENCY
DOMAIN

DFT

REPLACEMENT IN
TIME DOMAIN

SIGNAL IN
FREQUENCY DOMAIN

SIGNAL IN
TIME DOMAIN

FIG. 21A
FIG. 21B

FIG. 22

RECEIVING SIDE

EP 0 942 547 A1

56

## INTERNATIONAL SEARCH REPORT

| International application No. |
|---|
| PCT/JP98/03728 |

**A. CLASSIFICATION OF SUBJECT MATTER**
Int.Cl⁶ H04J11/00

According to International Patent Classification (IPC) or to both national classification and IPC

**B. FIELDS SEARCHED**

Minimum documentation searched (classification system followed by classification symbols)
Int.Cl⁶ H04J11/00

Documentation searched other than minimum documentation to the extent that such documents are included in the fields searched
Jitsuyo Shinan Koho (Y1, Y2)   1926–1998   Toroku Jitsuyo Shinan Koho (U)   1994–1998
Kokai Jitsuyo Shinan Koho (U)   1971–1998   Jitsuyo Shinan Toroku Koho (Y2)   1996–1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 4-501348, A (Thomson-CSF), 5 March, 1992 (05. 03. 92), Fig. 21 & WO, 90-04893, A | 1-30 |
| A | JP, 8-501195, A (British Broadcasting Corp.), 6 February, 1996 (06. 02. 96), Fig. 5 & WO, 94-06231 | 1-30 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 17 November, 1998 (17. 11. 98) | 1 December, 1998 (01. 12. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)